(19) Europäisches Patentamt / European Patent Office / Office européen des brevets

(11) **EP 4 725 695 A1**

(12) **EUROPEAN PATENT APPLICATION**
published in accordance with Art. 153(4) EPC

(43) Date of publication:
**15.04.2026 Bulletin 2026/16**

(21) Application number: **24823464.3**

(22) Date of filing: **14.06.2024**

(51) International Patent Classification (IPC):
**B32B 27/32** (2006.01)    **B32B 7/022** (2019.01)
**B65D 65/40** (2006.01)

(52) Cooperative Patent Classification (CPC):
**B32B 7/022; B32B 27/32; B65D 65/40**

(86) International application number:
**PCT/JP2024/021651**

(87) International publication number:
**WO 2024/257851 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 JP 2023099482**

(71) Applicant: **Toppan Holdings Inc.**
**Tokyo 110-0016 (JP)**

(72) Inventors:
• **FUKUGAMI, Miki**
  **Tokyo 110-0016 (JP)**
• **FURUTA, Kaoru**
  **Tokyo 110-0016 (JP)**
• **YAMADA, Mikinori**
  **Tokyo 110-0016 (JP)**
• **SAITO, Takashi**
  **Tokyo 110-0016 (JP)**

(74) Representative: **Wagner & Geyer**
**Partnerschaft mbB**
**Patent- und Rechtsanwälte**
**Gewürzmühlstrasse 5**
**80538 München (DE)**

(54) **GAS BARRIER LAMINATE AND PACKAGING**

(57) A gas barrier laminate includes a barrier layer having a base on which a barrier coat is provided, a sealant layer overlapping a first main surface of the barrier layer, a support layer overlapping a second main surface of the barrier layer, a first adhesive layer that bonds the barrier layer and the sealant layer, and a second adhesive layer that bonds the barrier layer and the support layer, in which the first adhesive layer includes a two-component curing type urethane adhesive, the base includes a polyolefin, and after retort treatment is performed on the gas barrier laminate, an elastic modulus of the first adhesive layer, as measured with a scanning probe microscope, is 5 MPa or more and less than 53 MPa.

**Fig.2**

## Description

### Technical Field

The present disclosure relates to a gas barrier laminate and a packaging.

### Background Art

Conventionally, from the viewpoint of protecting contents wrapped in a packaging material, and the like, a laminate provided with gas barrier properties such as oxygen barrier properties and water vapor barrier properties (a gas barrier laminate) has been used. For example, Patent Literature 1 below discloses a gas barrier laminated film including a resin base, a gas barrier vapor deposition layer provided on the resin base and mainly including an inorganic compound, and a gas barrier coating layer provided on the gas barrier vapor deposition layer.

### Citation List

#### Patent Literature

Patent Literature 1: Japanese Patent No. 4200972

### Summary of Invention

#### Technical Problem

When a retort treatment is performed on a gas barrier laminate as described above, there has been a problem that the gas barrier properties are likely to deteriorate.
An object according to an aspect of the present disclosure is to provide a gas barrier laminate and a packaging that can exhibit good gas barrier properties even after a retort treatment.

#### Solution to Problem

A gas barrier laminate according to an aspect of the present disclosure is a gas barrier laminate including a barrier layer having a base on which a barrier coat is provided, a sealant layer overlapping a first main surface of the barrier layer, a support layer overlapping a second main surface of the barrier layer, a first adhesive layer that bonds the barrier layer and the sealant layer, and a second adhesive layer that bonds the barrier layer and the support layer, in which the first adhesive layer includes a two-component curing type urethane adhesive, the base includes a polyolefin, and after retort treatment is performed on the gas barrier laminate, an elastic modulus of the first adhesive layer, as measured with a scanning probe microscope, is 5 MPa or more and less than 53 MPa.
According to this gas barrier laminate, the elastic modulus of the first adhesive layer, which is measured with a scanning probe microscope (SPM), is 5 MPa or more and less than 53 MPa. In this case, even if expansion and contraction of the base occur due to the retort treatment, the first adhesive layer follows well. For this reason, it is possible to suppress the occurrence of damage to the barrier coat due to the occurrence of cracks in the first adhesive layer. Therefore, it is possible to provide a gas barrier laminate that can exhibit good gas barrier properties even after retort treatment.
The second adhesive layer may include a two-component curing type urethane adhesive, and an elastic modulus of the second adhesive layer, which is measured with a scanning probe microscope after the retort treatment is performed, may be 5 MPa or more and less than 53 MPa. In this case, even if expansion and contraction of the base and the support layer occurs due to the retort treatment, the second adhesive layer follows well. For this reason, it is possible to suppress the occurrence of damage to the barrier coat due to the occurrence of cracks in the second adhesive layer.
The barrier layer may further have an anchor coat layer and a vapor deposition layer located between the base and the barrier coat, and the anchor coat layer may be located between the base and the vapor deposition layer. In this case, the gas barrier properties of the gas barrier laminate can be improved.
A thickness of the vapor deposition layer may be 5 nm or more and 80 nm or less. In this case, gas barrier properties can be improved while preventing cracking of the vapor deposition layer.
An elastic modulus of the first adhesive layer, which is measured with a scanning probe microscope before the retort treatment is performed, may be 55 MPa or more.
Each of a thickness of the first adhesive layer and a thickness of the second adhesive layer may be 0.5 $\mu$m or more and 10 $\mu$m or less. In this case, the gas barrier laminate can be easily made of a mono-material while favorably suppressing peeling of the barrier layer and the sealant layer.

An elastic modulus of the sealant layer may be 600 MPa or more and 1,400 MPa or less. In this case, the moldability of the gas barrier laminate can be improved.

Each of the base and the sealant layer may be a polyolefin film, and the proportion of the total mass of polyolefin in the laminate may be 90% by mass or more. In this case, mono-materialization is realized.

The base may be an oriented polypropylene film, and the sealant layer may be a cast polypropylene film. In this case, the laminate is excellent in heat resistance to retort treatment and the like.

An aspect of the present disclosure may provide a packaging that is a packaging bag of the above gas barrier laminate.

**Advantageous Effects of Invention**

According to the present disclosure, it is possible to provide a gas barrier laminate and a packaging that can exhibit good gas barrier properties even after retort treatment.

**Brief Description of Drawings**

Fig. 1 is a schematic plan view of a laminate according to an embodiment.

Fig. 2 is a schematic cross-sectional view showing a laminate according to an embodiment.

Fig. 3 is a schematic front view of an example of a packaging.

Fig. 4 is a schematic diagram showing a method for measuring a heat shrinkage rate during oven heating.

**Description of Embodiments**

Hereinafter, preferred embodiments of the present disclosure will be described in detail with reference to the drawings as appropriate. In the drawings, the same or corresponding parts are denoted by the same reference numerals, and redundant description will be omitted. Further, the dimensional ratios in the drawings are not limited to the illustrated ratios.

<Laminate>

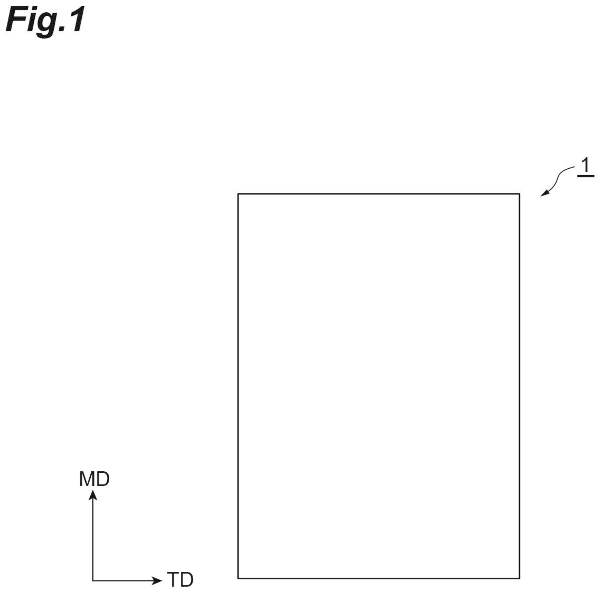

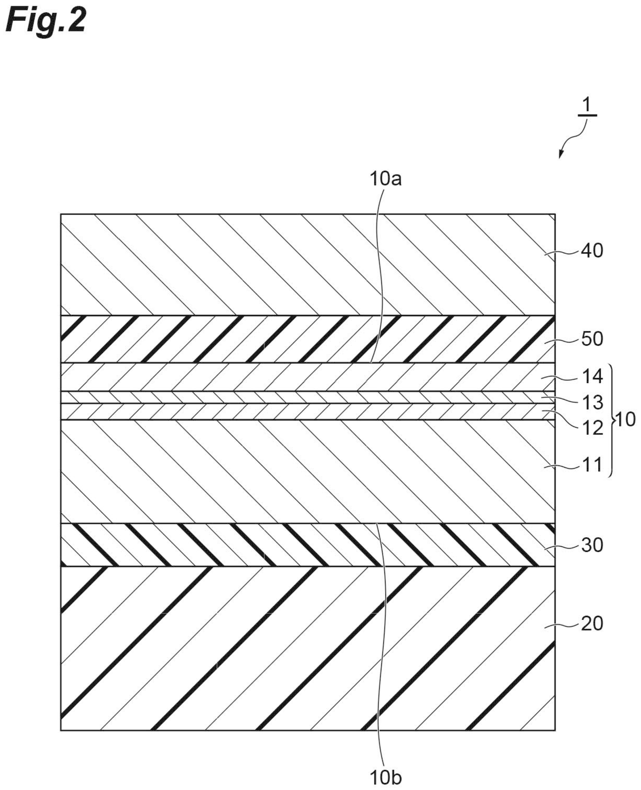

Fig. 1 is a schematic plan view of a laminate according to an embodiment. Fig. 2 is a schematic cross-sectional view showing a laminate according to an embodiment. A laminate 1 shown in Fig. 1 and Fig. 2 is a sheet-like member having gas barrier properties (a gas barrier laminate), and is, for example, a sheet-like packaging material used for manufacturing packagings and the like. The laminate 1 can be suitably used for applications in which heat treatment such as retort treatment or boil treatment is performed, for example.

A retort treatment is a method of sterilizing microorganisms such as mold, yeast, and bacteria under pressure, generally for preserving foods, pharmaceuticals, and the like. Usually, a packaging in which food or the like is packaged is subjected to pressure sterilization treatment under conditions of 105 to 140°C and 0.15 to 0.30 MPa for 10 to 120 minutes. Retort apparatuses include a steam type that uses heated steam and a hot water type that uses pressurized heated water, and are appropriately used depending on the sterilization conditions of the food or the like to be the contents. Boil treatment is a method of moist heat sterilization for preserving foods, pharmaceuticals, and the like. Usually, depending on the contents, a packaging in which food or the like is packaged is subjected to moist heat sterilization treatment under conditions of 60 to 100°C and atmospheric pressure for 10 to 120 minutes. Boil treatment is usually performed at 100°C or lower using a hot water tank. As for the method, there are a batch type in which a packaging is immersed in a hot water tank at a constant temperature, treated for a certain period of time, and then taken out, and a continuous type in which a packaging is passed through a hot water tank in a tunnel-like manner.

The laminate 1 has a barrier layer 10, a sealant layer 20, a first adhesive layer 30, a support layer 40, and a second adhesive layer 50. In the laminate 1, the sealant layer 20, the first adhesive layer 30, the barrier layer 10, the second adhesive layer 50, and the support layer 40 are laminated in this order. Hereinafter, as shown in Fig. 1, a direction MD is defined as a flow direction (longitudinal direction) of the laminate 1, and a direction TD is defined as a width direction (widthwise direction) of the laminate 1. Further, a direction orthogonal to both the directions MD and TD is defined as a lamination direction of members included in the laminate 1.

[Barrier Layer 10]

The barrier layer 10 is a member that functions as an intermediate layer in the laminate 1, and exhibits gas barrier properties against gases such as water vapor and oxygen. As shown in Fig. 2, the barrier layer 10 has a base 11, an adhesion layer 12, a vapor deposition layer 13, and a barrier coat 14. In the barrier layer 10, the base 11, the adhesion layer 12, the vapor deposition layer 13, and the barrier coat 14 are laminated in this order. Therefore, the adhesion layer 12 and the vapor deposition layer 13 are located between the base 11 and the barrier coat 14 in the lamination direction, and the adhesion layer 12 is located between the base 11 and the vapor deposition layer 13. In the present embodiment, the base 11 of the barrier layer 10 is closest to the first adhesive layer 30 in the lamination direction and forms a first main surface 10b of the barrier layer 10. Therefore, the barrier coat 14 of the barrier layer 10 is farthest from the first adhesive layer 30 in the lamination direction and forms a second main surface 10a of the barrier layer 10.

[Base 11]

The base 11 is a plastic member that functions as a support layer in the laminate 1. The thickness of the base 11 is not particularly limited. Depending on the application, the thickness can be 6 to 200 $\mu$m, but from the viewpoint of material reduction for reducing environmental impact, and from the viewpoint of obtaining excellent heat resistance, impact resistance, and excellent gas barrier properties, it may be 9 to 50 $\mu$m, may be 12 to 38 $\mu$m, and may be 18 to 30 $\mu$m.
From the viewpoint of recycling suitability of the laminate 1, and the like, the base 11 is, for example, a polyolefin film. In the present embodiment, the base 11 may include a polypropylene film, or may be made of a polypropylene film. The polypropylene film may be an acid-modified polypropylene film or the like obtained by graft-modifying polypropylene using an unsaturated carboxylic acid, an acid anhydride of an unsaturated carboxylic acid, an ester of an unsaturated carboxylic acid, or the like. Further, as the polypropylene, polypropylene resins such as homopolypropylene resin (PP), propylene-ethylene random copolymer, propylene-ethylene block copolymer, and propylene-$\alpha$-olefin copolymer, or the like can be used.
Various additives such as a flame retardant, a slip agent, an antiblocking agent, an antioxidant, a light stabilizer, a tackifier, and an antistatic agent may be added to the polypropylene film constituting the base 11.
The polypropylene film constituting the base 11 may be an oriented film or a cast film. From the viewpoints of impact resistance, heat resistance, water resistance, dimensional stability, and the like, the polypropylene film may be an oriented polypropylene film. This can suppress thermal fusion of the base 11 in a heat sealing step during bag production. Further, the laminate 1 may be used for applications in which heat treatment such as retort treatment or boil treatment is performed. The stretching method is not particularly limited, and any method may be used as long as a film with stable dimensions can be supplied, such as stretching by inflation, or uniaxial or biaxial stretching.
The base 11 may be subjected to various pretreatments such as corona treatment, plasma treatment, and flame treatment on its laminated surface to the extent that the barrier performance is not impaired, or a coat layer such as an easy-adhesive layer may be provided. The laminated surface may be a surface that forms the first main surface 10b of the barrier layer 10.

[Heat Shrinkage Rate of Base 11]

After the base 11 is exposed to 120°C for 15 minutes (hereinafter, simply referred to as "after heating"), the heat shrinkage rate in the MD direction of the base 11, calculated using the following formula (1), is 1% or more. For example, after the base 11 or the barrier layer 10 including the base 11 is heated in an oven at 120°C for 15 minutes, the heat shrinkage rate in the MD direction of the base 11, calculated using the following formula (1), is 1% or more. From the viewpoints of reducing deformation during bag production, suppressing peeling of the barrier layer 10 and the sealant layer 20, and the like, the heat shrinkage rate in the MD direction is, for example, 12% or less, 11% or less, 10% or less, 9% or less, 8% or less, 7% or less, or the like. In one example, the heat shrinkage rate in the MD direction is 1.2% or more, 1.5% or more, 2% or more, 2.5% or more, 3% or more, or the like. The heat shrinkage rate in the MD direction is, for example, 1% or more and 7% or less, 1% or more and 6.7% or less, 1.5% or more and 4% or less, 2% or more and 3.7% or less, or the like. For example, a biaxially oriented polypropylene film has the above heat shrinkage rate of 1%, while a PET film has the above heat shrinkage rate of less than 1%.

Heat shrinkage rate in MD direction (%) = (length in MD direction before heating - length in MD direction after heating) / length in MD direction before heating $\times$ 100     (1)

After the above heating, the heat shrinkage rate in the TD direction of the base 11, calculated using the following formula (2), is not particularly limited, but is, for example, 1% or more, and is equal to or less than the heat shrinkage rate in the MD direction of the base 11. From the viewpoints of reducing deformation during bag production, suppressing peeling of the barrier layer 10 and the sealant layer 20, and the like, the heat shrinkage rate in the TD direction is, for example, 12% or less, 11% or less, 10% or less, 9% or less, 8% or less, 7% or less, or the like. In one example, the heat shrinkage rate in the TD direction is 1.2% or more, 1.5% or more, 2% or more, 2.5% or more, 3% or more, or the like. The heat shrinkage rate in the TD direction is, for example, 1% or more and 7% or less, 1% or more and 6.7% or less, 1.5% or more and 4% or less, 2% or more and 3.7% or less, or the like.

Heat shrinkage rate in TD direction (%) = (length in TD direction before heating - length in TD direction after heating) / length in TD direction before heating × 100       (2)

Generally, in an oriented film such as a biaxially oriented film, the heat shrinkage rate in the MD direction is larger than the heat shrinkage rate in the TD direction.

[Adhesion layer 12]

The adhesion layer 12 functions as a layer (anchor coat layer) that can exhibit improved adhesion performance of the vapor deposition layer 13 on the base 11, and is provided directly on the base 11. Therefore, the adhesion layer 12 is located between the base 11 and the vapor deposition layer 13. Providing the adhesion layer 12 can make the smoothness of the surface on which the vapor deposition layer 13 is provided in the barrier layer 10 to improve. Improving the smoothness makes it easier to form the vapor deposition layer 13 uniformly without defects, and makes it easier to exhibit high barrier properties. The adhesion layer 12 can be formed using, for example, an anchor coating agent.

Examples of the anchor coating agent include polyester-based polyurethane resins, and polyether-based polyurethane resins. As the anchor coating agent, a polyester-based polyurethane resin may be used from the viewpoints of heat resistance and interlayer adhesion strength.

The thickness of the adhesion layer 12 is not particularly limited, but the thickness may be in the range of 0.01 to 5 μm, may be in the range of 0.03 to 3 μm, or may be in the range of 0.05 to 2 μm. When the thickness of the adhesion layer 12 is equal to or more than the above lower limit value, a more sufficient interlayer adhesion strength is likely to be obtained, while when it is equal to or less than the above upper limit value, desired gas barrier properties are likely to be easily exhibited.

As a method for applying the adhesion layer 12 on the base 11, known coating methods can be used without particular limitation, and examples include a dipping method, a method using a spray, a coater, a printing machine, a brush, or the like. Further, as the types of coaters and printing machines used in these methods and their coating methods, examples include gravure coaters such as a direct gravure method, a reverse gravure method, a kiss reverse gravure method, and an offset gravure method, a reverse roll coater, a micro gravure coater, a coater with a chamber doctor, an air knife coater, a dip coater, a bar coater, a comma coater, a die coater, and the like.

As the coating amount of the adhesion layer 12, the mass per 1 $m^2$ after applying and drying the anchor coating agent may be 0.01 to 5 $g/m^2$, or 0.03 to 3 $g/m^2$. When the mass per 1 $m^2$ after applying and drying the anchor coating agent is equal to or more than the above lower limit, film formation is likely to be sufficient, while when it is equal to or less than the above upper limit, it is likely to be easily dried and the solvent is less likely to remain.

The method for drying the adhesion layer 12 is not particularly limited, but examples include a method by natural drying, a method of drying in an oven set to a predetermined temperature, and a method using a dryer attached to the coater, such as an arch dryer, a floating dryer, a drum dryer, or an infrared dryer. Furthermore, the drying conditions can be appropriately selected depending on the drying method, and for example, in the method of drying in an oven, drying may be performed at a temperature of 60 to 100°C for about 1 second to 2 minutes.

As the adhesion layer 12, a polyvinyl alcohol-based resin can be used instead of the above polyurethane resin. The polyvinyl alcohol-based resin may be any resin having a vinyl alcohol unit formed by saponifying a vinyl ester unit, and examples include polyvinyl alcohol (PVA) and ethylene-vinyl alcohol copolymer (EVOH).

Examples of PVA include resins obtained by polymerizing a vinyl ester such as vinyl acetate, vinyl formate, vinyl propionate, vinyl valerate, vinyl caprate, vinyl laurate, vinyl stearate, vinyl pivalate, or vinyl versatate alone, and then saponifying it. The PVA may be a modified PVA that has been copolymerization-modified or post-modified. The modified PVA can be obtained, for example, by copolymerizing a vinyl ester and an unsaturated monomer copolymerizable with the vinyl ester, and then saponifying the copolymer. Examples of the unsaturated monomer copolymerizable with the vinyl ester include olefins such as ethylene, propylene, isobutylene, α-octene, α-dodecene, and α-octadecene; hydroxy group-containing α-olefins such as 3-buten-1-ol, 4-pentyn-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; and vinyl compounds such as alkyl vinyl ethers, dimethyl allyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; vinylidene chloride, 1,4-diacetoxy-2-butene, vinylene carbonate, and the like.

The degree of polymerization of PVA is, for example, 300 to 3,000. If the degree of polymerization is less than 300, the barrier properties are likely to decrease, and if it exceeds 3,000, the viscosity is too high and the coating suitability is likely to decrease. The degree of saponification of PVA may be 90 mol% or more, may be 95 mol% or more, or may be 99 mol% or more. The degree of saponification of PVA may be 100 mol% or less, or 99.9 mol% or less. The degree of polymerization and the degree of saponification of PVA can be measured in accordance with the method described in JIS K 6726 (1994).

EVOH is generally obtained by saponifying a copolymer of ethylene and a vinyl ester such as vinyl acetate, vinyl formate, vinyl propionate, vinyl valerate, vinyl caprate, vinyl laurate, vinyl stearate, vinyl pivalate, or vinyl versatate.

The degree of polymerization of EVOH is, for example, 300 to 3,000. If the degree of polymerization is less than 300, the barrier properties are likely decrease, and if it exceeds 3,000, the viscosity is too high and the coating suitability is likely decrease. The degree of saponification of the vinyl ester component of EVOH may be 90 mol% or more, may be 95 mol% or more, or may be 99 mol% or more. The degree of saponification of EVOH may be 100 mol% or less, or 99.9 mol% or less. The degree of saponification of EVOH is calculated using the peak area of hydrogen atoms included in the vinyl ester structure and the peak area of hydrogen atoms included in the vinyl alcohol structure by performing nuclear magnetic resonance (1H-NMR) measurement.

The ethylene unit content of EVOH is 10 mol% or more, more preferably 15 mol% or more, still more preferably 20 mol% or more, and particularly preferably 25 mol% or more. Further, the ethylene unit content of EVOH is preferably 65 mol% or less, more preferably 55 mol% or less, and still more preferably 50 mol% or less. When the ethylene unit content is 10 mol% or more, good gas barrier properties or dimensional stability under high humidity can be maintained. On the other hand, when the ethylene unit content is 65 mol% or less, the gas barrier properties can be enhanced. The ethylene unit content of EVOH can be calculated using an NMR method.

When a polyvinyl alcohol-based resin is used as the adhesion layer 12, examples of the method for forming the adhesion layer 12 include application using a polyvinyl alcohol-based resin solution and multi-layer extrusion.

[Vapor Deposition Layer 13]

The vapor deposition layer 13 is a layer (gas barrier layer) that exhibits gas barrier properties against water vapor and oxygen, and includes at least one of a metal or an inorganic oxide. The vapor deposition layer 13 is provided directly on the adhesion layer 12. The vapor deposition layer 13 may have a single-layer structure or a laminated structure. Therefore, the vapor deposition layer 13 includes at least one of a metal vapor deposition layer or an inorganic oxide layer. When the vapor deposition layer 13 includes a metal vapor deposition layer, examples of the metal included in the metal vapor deposition layer include aluminum, and stainless steel. When the vapor deposition layer 13 includes an inorganic oxide layer, examples of the inorganic oxide included in the inorganic oxide layer include aluminum oxide, silicon oxide, magnesium oxide, and tin oxide. From the viewpoints of transparency and barrier properties, the inorganic oxide may be selected from the group consisting of aluminum oxide, silicon oxide, and magnesium oxide. Further, from the viewpoint of excellent tensile stretchability during processing, the inorganic oxide layer may include a layer using silicon oxide. Using the inorganic oxide layer can make it to obtain high barrier properties with a very thin layer to the extent that it does not affect the recyclability of the laminate 1.

When the vapor deposition layer 13 is an inorganic oxide layer using silicon oxide, the O/Si ratio of the inorganic oxide layer is desirably 1.7 or more. When the O/Si ratio is 1.7 or more, the content ratio of metallic Si is suppressed, and good transparency is easily obtained. Further, the O/Si ratio is preferably 2.0 or less. When the O/Si ratio is 2.0 or less, it is possible to prevent the crystallinity of SiO from being high and the inorganic oxide layer from becoming too hard, and good tensile resistance can be obtained. This can suppress the occurrence of cracks in the inorganic oxide layer when the barrier coat 14 is laminated. Further, even after being formed into a packaging, the base 11 may shrink due to heat during boil or retort treatment, but since the O/Si ratio is 2.0 or less, the inorganic oxide layer easily follows the shrinkage, and a decrease in barrier properties can be suppressed. From the viewpoint of more sufficiently obtaining these effects, the O/Si ratio of the inorganic oxide layer is preferably 1.75 or more and 1.9 or less, and more preferably 1.8 or more and 1.85 or less.

When the vapor deposition layer 13 is an inorganic oxide layer using silicon oxide, the O/Si ratio of the inorganic oxide layer can be determined using X-ray photoelectron spectroscopy (XPS). For example, the measurement can be performed with an X-ray photoelectron spectrometer (product name: JPS-90MXV, manufactured by JEOL Ltd.) as the measuring apparatus, using non-monochromatic MgK$\alpha$ (1253.6 eV) as the X-ray source, at an X-ray output of 100 W (10 kV-10 mA). For the quantitative analysis to determine the O/Si ratio, relative sensitivity factors of 2.28 for O1s and 0.9 for Si2p can be used, respectively.

The thickness of the vapor deposition layer 13 is, for example, 5 nm or more and 80 nm or less. When the thickness of the vapor deposition layer 13 is 5 nm or more, sufficient water vapor barrier properties can be obtained. When the thickness of the vapor deposition layer 13 is 80 nm or less, the occurrence of cracks due to deformation caused by internal stress of the thin film can be suppressed, and a decrease in water vapor barrier properties can be suppressed. If the thickness of the vapor deposition layer 13 exceeds 80 nm, the cost tends to increase due to an increase in the amount of material used, a prolongation of the film formation time, and the like, which is not preferable also from an economic viewpoint. From the same viewpoint as above, the thickness of the vapor deposition layer 13 may be 20 nm or more and 40 nm or less.

The vapor deposition layer 13 can be formed by, for example, vacuum film formation. In vacuum film formation, a physical vapor deposition method or a chemical vapor deposition method can be used. Examples of the physical vapor deposition method include, but are not limited to, a vacuum deposition method, a sputtering method, and an ion plating method. Examples of the chemical vapor deposition method include, but are not limited to, a thermal CVD method, a plasma CVD method, and a photo-CVD method.

In the above vacuum film formation, a resistance heating vacuum deposition method, an EB (Electron Beam) heating vacuum deposition method, an induction heating vacuum deposition method, a sputtering method, a reactive sputtering method, a dual magnetron sputtering method, a plasma enhanced chemical vapor deposition method (PECVD method), and the like are particularly preferably used. However, considering productivity, the vacuum deposition method is currently the most excellent. As the heating means for the vacuum deposition method, any of an electron beam heating method, a resistance heating method, and an induction heating method may be used.

[Barrier Coat 14]

The barrier coat 14 is a coating layer having gas barrier properties (gas barrier coating layer) and is provided over the base 11. The barrier coat 14 is a layer formed using a composition for forming a gas barrier coating layer (hereinafter also referred to as a coating agent) containing at least one selected from the group consisting of a hydroxyl group-containing polymer compound, a metal alkoxide, a silane coupling agent, and hydrolysates thereof.

From the viewpoint of more sufficiently maintaining the gas barrier properties after hot water treatment such as retort treatment, the coating agent preferably contains at least a silane coupling agent or a hydrolysate thereof, more preferably contains at least one selected from the group consisting of a hydroxyl group-containing polymer compound, a metal alkoxide, and hydrolysates thereof, and a silane coupling agent or a hydrolysate thereof, and still more preferably contains a hydroxyl group-containing polymer compound or a hydrolysate thereof, a metal alkoxide or a hydrolysate thereof, and a silane coupling agent or a hydrolysate thereof. The coating agent can be prepared, for example, by mixing a metal alkoxide and a silane coupling agent directly, or mixing a metal alkoxide and a silane coupling agent have been subjected to a treatment such as hydrolysis in advance, to a solution in which a hydroxyl group-containing polymer compound, which is a water-soluble polymer, is dissolved in an aqueous (water or water/alcohol mixed) solvent.

Each component contained in the coating agent for forming the barrier coat 14 will be described in detail. Examples of the hydroxyl group-containing polymer compound used in the coating agent include polyvinyl alcohol, polyvinylpyrrolidone, starch, methylcellulose, carboxymethylcellulose, and sodium alginate. Among these, when polyvinyl alcohol (PVA) is used in the coating agent for the barrier coat 14, the gas barrier properties are particularly excellent, which is preferable.

From the viewpoint of obtaining excellent gas barrier properties, the barrier coat 14 is preferably formed from a composition including at least one selected from the group consisting of a metal alkoxide represented by the following general formula (I) and a hydrolysate thereof.

$$M(OR^1)_m(R^2)_{n-m} \cdots \qquad (I)$$

In the above general formula (I), $R^1$ and $R^2$ are each independently a monovalent organic group having 1 to 8 carbon atoms, and are preferably an alkyl group such as a methyl group or an ethyl group. M represents an n-valent metal atom such as Si, Ti, Al, or Zr. m is an integer of 1 to n. When a plurality of $R^1$s or $R^2$s are present, the $R^1$s or $R^2$s may be the same or different.

Specific examples of the metal alkoxide include tetraethoxysilane $[Si(OC_2H_5)_4]$, and triisopropoxyaluminum $[Al(O-2'-C_3H_7)_3]$. Tetraethoxysilane and triisopropoxyaluminum are preferable because they are relatively stable in an aqueous solvent after hydrolysis.

Examples of the silane coupling agent include a compound represented by the following general formula (II).

$$Si(OR^{11})_p(R^{12})_{3-p}R^{13} \cdots \qquad (II)$$

In the above general formula (II), $R^{11}$ represents an alkyl group such as a methyl group or an ethyl group, $R^{12}$ represents a monovalent organic group such as an alkyl group, an aralkyl group, an aryl group, an alkenyl group, an alkyl group substituted with an acryloxy group, or an alkyl group substituted with a methacryloxy group, $R^{13}$ represents a monovalent organic functional group, and p represents an integer of 1 to 3. When a plurality of $R^{11}$s or $R^{12}$s are present, the $R^{11}$s or $R^{12}$s may be the same or different. Examples of the monovalent organic functional group represented by $R^{13}$ include a glycidyloxy group, an epoxy group, a mercapto group, a hydroxyl group, an amino group, an alkyl group substituted with a halogen atom, or a monovalent organic functional group containing an isocyanate group.

Specific examples of the silane coupling agent include silane coupling agents such as vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane.

The silane coupling agent may be a multimer in which the compound represented by the above general formula (II) is polymerized. The multimer is preferably a trimer, and more preferably 1,3,5-tris(3-trialkoxysilylalkyl)isocyanurate. This is a polycondensate of 3-isocyanatealkylalkoxysilane. It is known that this 1,3,5-tris(3-trialkoxysilylalkyl)isocyanurate has no chemical reactivity in the isocyanate part, but the reactivity is ensured by the polarity of the nurate part. Generally, it is added to adhesives and the like in the same way as 3-isocyanatealkylalkoxysilane, and is known as an adhesion promoter. Therefore, by adding 1,3,5-tris(3-trialkoxysilylalkyl)isocyanurate to a hydroxyl group-containing polymer compound, the water resistance of the gas barrier coating layer can be improved by hydrogen bonding. While 3-isocyanatealkylalkoxysilane has high reactivity and low liquid stability, 1,3,5-tris(3-trialkoxysilylalkyl)isocyanurate is easily dispersed in an aqueous solution and can keep the liquid viscosity stable, in which the nurate part is not water-soluble due to the polarity thereof. Further, the water resistance performance is equivalent between 3-isocyanatealkylalkoxysilane and 1,3,5-tris(3-trialkoxysilylalkyl)isocyanurate.

Some of 1,3,5-tris(3-trialkoxysilylalkyl)isocyanurate are produced by thermal condensation of 3-isocyanatopropylalkoxysilane, so may contain 3-isocyanatopropylalkoxysilane, which is the raw material, but there is no particular problem. It is more preferably 1,3,5-tris(3-trialkoxysilylpropyl)isocyanurate, and still more preferably 1,3,5-tris(3-trimethoxysilylpropyl)isocyanurate. This methoxy group has a high hydrolysis rate, and those containing a propyl group can be obtained at a relatively low cost, so 1,3,5-tris(3-trimethoxysilylpropyl)isocyanurate is practically advantageous.

It is also possible to add an isocyanate compound or known additives such as a dispersant, a stabilizer, a viscosity modifier, and a coloring agent to the coating agent as necessary, to the extent that the gas barrier properties are not impaired.

The thickness of the barrier coat 14 may be 50 to 1000 nm, or 100 to 500 nm. When the thickness of the barrier coat 14 is 50 nm or more, more sufficient gas barrier properties are likely to be obtained, and when it is 1000 nm or less, sufficient flexibility is likely to be maintained.

The coating solution for forming the barrier coat 14 can be applied by, for example, a dipping method, a roll coating method, a gravure coating method, a reverse gravure coating method, an air knife coating method, a comma coating method, a die coating method, a screen printing method, a spray coating method, a gravure offset method, or the like. The coating film formed by applying this coating solution can be dried by, for example, a hot air drying method, a hot roll drying method, a highfrequency irradiation method, an infrared irradiation method, a UV irradiation method, or a combination thereof.

The temperature for drying the coating film may be, for example, 50 to 150°C, or 70 to 100°C. By setting the drying temperature within the above range, the occurrence of cracks in the vapor deposition layer 13 and the barrier coat 14 can be further suppressed, and excellent barrier properties can be exhibited.

The barrier coat 14 may be formed using a coating agent including a polyvinyl alcohol-based resin and a silane compound. An acid catalyst, an alkali catalyst, a photopolymerization initiator, or the like may be added to the coating agent as necessary.

The polyvinyl alcohol-based resin is as described above. Examples of the silane compound include a silane coupling agent, polysilazane, and siloxane, and specific examples include tetramethoxysilane, tetraethoxysilane, glycidoxypropyltrimethoxysilane, acryloxypropyltrimethoxysilane, and hexamethyldisilazane.

[Printing Layer]

The laminate 1 may include a printing layer. The printing layer can be provided, for example, on at least one surface of the base 11. The printing layer is provided at a position visible from the outside of the laminate 1 for the purpose of displaying information about the contents, identifying the contents, improving concealing properties, or improving the design properties of the packaging. The printing method and printing ink are not particularly limited, and are appropriately selected from known printing methods and printing inks in consideration of printability on the film, design properties such as color tone, adhesion, safety as a food container, and the like. As the printing method, for example, a gravure printing method, an offset printing method, a gravure offset printing method, a flexo printing method, an inkjet printing method, or the like can be used. Among them, the gravure printing method can be preferably used from the viewpoints of productivity and high definition of patterns.

In order to enhance the adhesion of the printing layer, the surface of the layer on which the printing layer is provided may be subjected to various pretreatments such as corona treatment, plasma treatment, and flame treatment, or a coat layer such as an easy-adhesive layer may be provided.

[Sealant Layer 20]

The sealant layer 20 is a layer that imparts sealing properties by heat sealing in the laminate 1, and is overlapped the first main surface 10b of the barrier layer 10. From the viewpoint of recycling suitability of the laminate 1, the sealant layer 20 is a polyolefin film, similar to the base 11. In the present embodiment, the sealant layer 20 has a single-layer structure and is a resin layer mainly made of polypropylene, but is not limited thereto. The sealant layer 20 may have a laminated structure. The sealant layer 20 may include a polypropylene film, or may be made of a polypropylene film.

The polypropylene film may be an acid-modified polypropylene film or the like obtained by graft-modifying polypropylene using an unsaturated carboxylic acid, an acid anhydride of an unsaturated carboxylic acid, an ester of an unsaturated carboxylic acid, or the like. As the polypropylene, polypropylene resins such as homopolypropylene resin (PP), propylene-ethylene random copolymer (random PP), propylene-ethylene block copolymer (block PP), and propylene-$\alpha$-olefin copolymer can be used. In one example, when the sealant layer 20 has a laminated structure, the sealant layer 20 has at least one of a layer including a homopolypropylene resin, a layer including a random PP, a layer including a block PP, and a layer including a propylene-$\alpha$-olefin copolymer. From the viewpoint of shape stability of the sealant layer 20 and the like, a layer including a block PP may be used as an intermediate layer of the sealant layer 20. In this case, an elastomer may be added to the intermediate layer. From the viewpoint of the elastic modulus of the sealant layer 20 described later and the like, the additive amount of elastomer is, for example, 10% by mass or more and 30% by mass or less. From the viewpoint of the sealing function of the sealant layer 20, and the like, a layer including a random PP may constitute the front surface and the back surface of the sealant layer 20.

The polypropylene film constituting the sealant layer 20 may be a cast polypropylene film from the viewpoint of enhancing the sealing properties by heat sealing.

Various additives such as a flame retardant, a slip agent, an antiblocking agent, an antioxidant, a light stabilizer, a tackifier, and an antistatic agent may be added to the polypropylene film constituting the sealant layer 20.

The thickness of the sealant layer 20 is determined by the mass of the contents, the shape of the packaging, and the like, but may be approximately 30 to 150 $\mu$m, or 50 to 80 $\mu$m.

From the viewpoint of the opening property of a packaging, and the like, when the packaging or the like is formed from the laminate 1, the elastic modulus of the sealant layer is, for example, 600 MPa or more, 700 MPa or more, 850 MPa or more, or the like. Each of the elastic modulus of the sealant layer 20 along the MD direction of the base 11 and the elastic modulus of the sealant layer 20 along the TD direction of the base 11 is, for example, 600 MPa or more. In one example, the elastic modulus of the sealant layer 20 along the MD direction of the base 11 is 850 MPa or more, and the elastic modulus of the sealant layer 20 along the TD direction of the base 11 is 700 MPa or more. From the viewpoint of adhesion between the sealant layers 20 and the like, the elastic modulus of the sealant layer is, for example, 1,400 MPa or less, 1,100 MPa or less, 1,000 MPa or less, or the like. The elastic modulus of the sealant layer 20 along the MD direction of the base 11 is 1,100 MPa or less, and the elastic modulus of the sealant layer 20 along the TD direction of the base 11 is 1,000 MPa or less. In one example, the elastic modulus of the sealant layer is 600 MPa or more and 1,400 MPa or less. In the present embodiment, the elastic modulus of the sealant layer 20 is calculated from the stress measured when a 20 mm square sample of the sealant layer 20 is stretched by 0.05% to 0.25% under the conditions of a gauge length of 250 mm and a tensile speed of 5 m/min. The opening property of the packaging corresponds to the ease of opening the bag. When the opening property of the packaging is good, filling the packaging with contents is less likely to fail.

As a method for forming the sealant layer 20, it can be formed by any known lamination method, such as a dry lamination method in which a film-like sealant layer made of the above-mentioned polypropylene is bonded with an adhesive such as a one-component or two-component curing type urethane-based adhesive, a non-solvent dry lamination method in which a film-like sealant layer is bonded using a solvent-free adhesive, or an extrusion lamination method in which the above-mentioned polypropylene is heated and melted, extruded in a curtain shape, and bonded.

Among the above forming methods, the dry lamination method is highly resistant to retort treatment, particularly high-temperature hot water treatment at 120°C or higher, and is preferable. On the other hand, if the packaging is used for applications where it is treated at a temperature of 85°C or lower, the lamination method is not particularly limited.

[First Adhesive Layer 30]

The first adhesive layer 30 is a layer-like member that bonds the barrier layer 10 and the sealant layer 20. As the material of the adhesive contained in the first adhesive layer 30, for example, a polyester-isocyanate-based resin, a urethane resin, a polyether-based resin, or the like can be used. From the viewpoint of using the packaging for retort applications, a urethane resin having retort resistance (for example, a two-component curing type urethane-based adhesive) may be used as the first adhesive layer 30. From the viewpoint of environmental consideration, the adhesive may not contain 3-glycidyloxypropyltrimethoxysilane (GPTMS). The first adhesive layer 30 may not contain chlorine. In this case, it is possible to suppress coloring of recycled resin and the like after recycling, and generation of odor due to heat treatment, in the adhesive forming the first adhesive layer 30. From the viewpoint of environmental consideration, the first adhesive layer 30 may be formed using a biomass material and may not contain a solvent.

When a two-component curing type urethane-based adhesive is used as the first adhesive layer 30, the urethane-based adhesive is formed of a main agent and a curing agent. The main agent is, for example, a polyester polyol, a polyester polyurethane polyol, or the like. The polyester polyol is obtained, for example, by polymerizing a diol and a dicarboxylic acid. The polyester polyurethane polyol is obtained by polymerizing a diol, a dicarboxylic acid, and a diisocyanate. The diol is, for example, ethylene glycol, neopentyl glycol, 1,6-hexanediol, 2,4-hexylene glycol, or the like. The dicarboxylic acid is adipic acid, sebacic acid, isophthalic acid, terephthalic acid, or the like. The diisocyanate is isophorone diisocyanate (hereinafter referred to as IPDI) or the like. The curing agent is, for example, a trimethylolpropane (hereinafter referred to as TMP) adduct of IPDI, a TMP adduct of xylylene diisocyanate (hereinafter referred to as XDI), a mixture of a TMP adduct of IPDI and a TMP adduct of XDI, a biuret of hexamethylene diisocyanate (hereinafter referred to as HDI), or the like. The weight average molecular weight (Mw) of the urethane-based adhesive is not particularly limited, but is, for example, about 10,000 to 50,000.

The thickness of the first adhesive layer 30 is 0.5 $\mu$m or more and 10 $\mu$m or less. When the thickness of the first adhesive layer 30 is 0.5 $\mu$m or more, peeling of the barrier layer 10 and the sealant layer 20 can be favorably suppressed. When the thickness of the first adhesive layer 30 is 10 $\mu$m or less, the laminate 1 can be easily made of a mono-material (details will be described later). The thickness of the first adhesive layer 30 may be 1 $\mu$m or more, 2 $\mu$m or mo re, 8 $\mu$m or less, 6 $\mu$m or less, or 5 $\mu$m or less.

[Elastic Modulus of First Adhesive Layer 30]

In the present embodiment, after a retort treatment is performed on the laminate 1, the elastic modulus of the first adhesive layer 30 is 5 MPa or more and less than 53 MPa. In this case, the first adhesive layer 30 can favorably follow the expansion and contraction of the base 11 due to heat treatment such as retort treatment or boil treatment. For this reason, even if the above heat treatment is performed on the laminate 1 including the base 11 having the above-mentioned heat shrinkage rate, peeling of the barrier layer 10 and the sealant layer 20 is less likely to occur. In addition, the occurrence of cracks in the first adhesive layer 30 at the time of cooling after the heat treatment and the like, and the occurrence of damage to the barrier layer 10 (at least one of the adhesion layer 12, the vapor deposition layer 13, or the barrier coat 14) due to the occurrence of the cracks are suppressed. The elastic modulus of the first adhesive layer 30 after the retort treatment is performed may be, for example, 9 MPa or more, 15 MPa or more, 20 MPa or more, 50 MPa or less, 47 MPa or less, or 42 MPa or less. The elastic modulus of the first adhesive layer 30 before the retort treatment is performed on the laminate 1 is not particularly limited, but is, for example, 55 MPa or more or 60 MPa or more.

The elastic modulus of the first adhesive layer 30 in the laminate 1 is obtained, for example, by measuring the elastic modulus of a cross-section of a portion exposed from the sealant layer 20 (exposed portion). The elastic modulus of the cross-section is obtained, for example, by being measured with a scanning probe microscope (SPM). In this case, the elastic modulus of the first adhesive layer 30 represents, for example, an elastic modulus calculated from a force curve measured with a scanning probe microscope (SPM). The elastic modulus of the first adhesive layer 30 is obtained, for example, by the method described in the Examples below. The elastic modulus of the first adhesive layer 30 on which a retort treatment has not been performed is also obtained by the method described in the Examples below.

The hardness of the adhesive layer can be controlled by the material of the adhesive, the amount of the curing agent, the aging time, and the like. The shorter the distance between the molecular chains of the adhesive, the harder the adhesive layer tends to be. The bulkier the adhesive, the softer the adhesive layer tends to be. The hardness of an aliphatic adhesive layer tends to be softer than that of an alicyclic or aromatic adhesive layer. The hardness of an alicyclic adhesive layer tends to be harder than that of an aromatic adhesive layer. The larger the amount of the curing agent contained in the adhesive layer, the harder the adhesive layer tends to be. The longer the aging time, the harder the adhesive layer tends to be. The harder the adhesive layer, the higher the elastic modulus of the adhesive layer.

[Support Layer 40]

The support layer 40 is a sheet-like plastic member that functions as a support in the laminate 1. The support layer 40 may have the same functions and performance as the base 11. The thickness of the support layer 40 may be about the same as the thickness of the base 11. From the viewpoint of recycling suitability of the laminate 1, the support layer 40 is, for example, a polyolefin film. From the viewpoint of heat resistance, the support layer 40 may include a polypropylene film, or may be made of a polypropylene film. Various additives such as a flame retardant, a slip agent, an antiblocking agent, an antioxidant, a light stabilizer, a tackifier, and an antistatic agent may be added to the polypropylene film constituting the support layer 40. The polypropylene film constituting the support layer 40 may be an oriented film or a cast film.

In the present embodiment, after the support layer 40 is exposed to 120°C for 15 minutes, the heat shrinkage rate in the MD direction of the support layer 40, calculated using the above formula (1), is 1% or more. For example, after the support layer 40, or a laminate of the support layer 40 and the barrier layer 10, is heated in an oven at 120°C for 15 minutes, the heat shrinkage rate in the MD direction of the support layer 40, calculated using the above formula (1), is 1% or more. The heat shrinkage rate in the MD direction is, for example, 12% or less, 11% or less, 10% or less, 9% or less, 8% or less, or 7% or less. In one example, the heat shrinkage rate in the MD direction is 1.2% or more, 1.5% or more, 2% or more, 2.5% or more, 3% or more, or the like. The heat shrinkage rate in the MD direction is, for example, 1% or more and 7% or less, 1% or more and 6.7% or less, 1.5% or more and 4% or less, 2% or more and 3.7% or less, or the like.

After the above heating, the heat shrinkage rate in the TD direction of the support layer 40, calculated using the above formula (2), is not particularly limited, but is, for example, 1% or more and 12% or less. In one example, the heat shrinkage rate in the TD direction is 1.2% or more, 1.5% or more, 2% or more, 2.5% or more, 3% or more, or the like. The heat shrinkage rate in the TD direction is, for example, 1% or more and 7% or less, 1% or more and 6.7% or less, 1.5% or more and 4% or less, 2% or more and 3.7% or less, or the like.

[Second Adhesive Layer 50]

The second adhesive layer 50 is a layer-like member that bonds the barrier layer 10 and the support layer 40. The material of the adhesive contained in the second adhesive layer 50 is the same as the material of the adhesive contained in the first adhesive layer 30. From the viewpoint of using the packaging for retort applications, a urethane resin having retort resistance (for example, a two-component curing type urethane-based adhesive) may be used as the second adhesive layer 50. The thickness of the second adhesive layer 50 is the same as the thickness of the first adhesive layer 30, and is 0.5 $\mu$m or more and 10 $\mu$m or less.

[Elastic Modulus of Second Adhesive Layer 50]

In the present embodiment, after a retort treatment is performed on the laminate 1, the elastic modulus of the second adhesive layer 50 is 5 MPa or more and less than 53 MPa. In this case, the second adhesive layer 50 can favorably follow the expansion and contraction of the base 11 and the support layer 40 due to heat treatment such as retort treatment or boil treatment. For this reason, even if the above heat treatment is performed on the laminate 1 including the base 11 and the support layer 40 having the above-mentioned heat shrinkage rate, peeling of the barrier layer 10 and the support layer 40 is less likely to occur. In addition, the occurrence of cracks in the second adhesive layer 50 at the time of cooling after the heat treatment and the like, and the occurrence of damage to the barrier layer 10 (at least one of the adhesion layer 12, the vapor deposition layer 13, or the barrier coat 14) due to the occurrence of the cracks are suppressed. The elastic modulus of the second adhesive layer 50 after the retort treatment is performed may be, for example, 9 MPa or more, 15 MPa or more, 20 MPa or more, 50 MPa or less, 47 MPa or less, or 42 MPa or less. The elastic modulus of the second adhesive layer 50 before the retort treatment is performed is not particularly limited, but is, for example, 55 MPa or more or 60 MPa or more. The elastic modulus of the second adhesive layer 50 on which a retort treatment has not been performed is also obtained by the method described in the Examples below.

The hardness of the adhesive layer can be controlled by the material of the adhesive, the amount of the curing agent, the aging time, and the like. The shorter the distance between the molecular chains of the adhesive, the harder the adhesive layer tends to be. The bulkier the adhesive, the softer the adhesive layer tends to be. The hardness of an aliphatic adhesive layer tends to be softer than that of an alicyclic or aromatic adhesive layer. The hardness of an alicyclic adhesive layer tends to be harder than that of an aromatic adhesive layer. The larger the amount of the curing agent contained in the adhesive layer, the harder the adhesive layer tends to be. The longer the aging time, the harder the adhesive layer tends to be. The harder the adhesive layer, the higher the elastic modulus of the adhesive layer.

[Polyolefin Content]

The proportion of the total mass of polyolefin (in this embodiment, polypropylene) in the laminate 1 is 90% by mass or more. As a result, the laminate 1 can be said to be a packaging material made of a single material (mono-material) and is excellent in recyclability. From the viewpoint of further improving recyclability, the polyolefin content in the laminate 1 may be 92.5% by mass or more, or 95% by mass or more, based on the total amount of the laminate 1.

<Packaging>

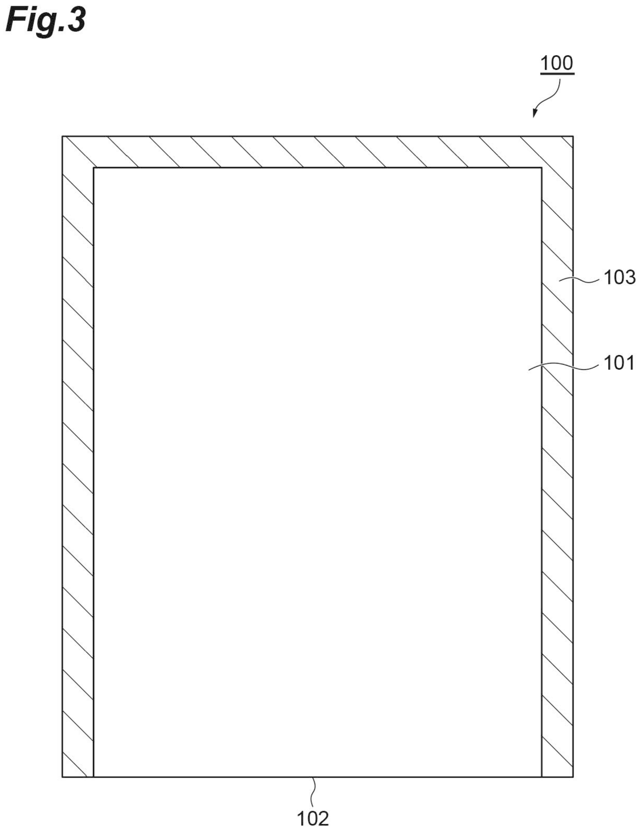

Hereinafter, an example of a packaging, which is a packaging bag of the laminate 1, will be described with reference to Fig. 3. Fig. 3 is a schematic plan view of an example of a packaging. The packaging 100 shown in Fig. 3 is formed into a bag shape, for example, by sealing the ends of the laminate 1 folded in two so as to sandwich the contents.

The packaging 100 is a three-side-seal bag having a main body part 101 in which contents are accommodated, a sealed part 102 located at an end of the main body part 101, and a folded part 103 where the laminate 1 is folded. The shape of the main body part 101 is not particularly limited, and exhibits, for example, a rectangular shape when viewed from a predetermined direction. At least a part of the outer surface of the main body part 101 may be printed. In the main body part 101, for example, a specific gas such as nitrogen may be accommodated in addition to the contents. The sealed part 102 is a part where one part and another part of the sealant layer 20 included in the laminate 1 are bonded together. In the sealed part 102, one part and another part of the sealant layer 20 included in the laminate 1 are in close contact with each other. The sealed part 102 is formed, for example, by heating and compressing (that is, heat-sealing) one part and another part of the sealant layer 20 included in the laminate 1, but is not limited thereto. For example, the sealed part 102 may be formed by cold sealing or the like. In the packaging 100, the folded part 103 constitutes one side of the main body part 101, and the sealed part 102 constitutes the remaining three sides of the main body part 101. Both ends of the folded part 103 and the sealed part 102 overlap.

After retort treatment is performed on the laminate 1 according to the present embodiment described above, the elastic modulus of the first adhesive layer 30, measured with a scanning probe microscope (SPM), is 5 MPa or more and less than 53 MPa. As a result, even if expansion and contraction of the base 11 occurs due to the retort treatment, the first adhesive layer 30 follows well. For this reason, even when the base 11 having a heat shrinkage rate in the MD direction of 1% or more is included in the laminate 1, it is possible to suppress the occurrence of damage to the barrier coat 14 due to the occurrence of cracks in the first adhesive layer 30. Therefore, it is possible to provide the laminate 1 that can exhibit good gas barrier properties (particularly, oxygen transmission prevention performance) even after a retort treatment.

In the present embodiment, the second adhesive layer 50 includes a two-component curing type urethane adhesive, and, the elastic modulus of the second adhesive layer 50, which is measured with a scanning probe microscope after a retort treatment is performed on the laminate 1, is 5 MPa or more and less than 53 MPa. In this case, even if expansion and contraction of the base 11 and the support layer 40 occurs due to the retort treatment, not only the first adhesive layer 30 but also the second adhesive layer 50 follows well. For this reason, it is possible to suppress the occurrence of damage to the barrier coat 14 due to the occurrence of cracks in the second adhesive layer 50 as well.

In the present embodiment, the barrier layer 10 has the adhesion layer 12 and the vapor deposition layer 13 located between the base 11 and the barrier coat 14, and the adhesion layer 12 is located between the base 11 and the vapor deposition layer 13. For this reason, the gas barrier properties of the laminate 1 can be improved as compared with a case where the barrier layer has only the base 11 and the barrier coat 14.

In the present embodiment, a thickness of the vapor deposition layer 13 may be 5 nm or more and 80 nm or less. In this case, gas barrier properties can be improved while preventing cracking of the vapor deposition layer 13.

In the present embodiment, a thickness of the first adhesive layer 30 may be 0.5 $\mu$m or more and 10 $\mu$m or less. In this case, the laminate 1 can be easily made of a mono-material while favorably suppressing peeling of the barrier layer 10 and the sealant layer 20.

In the present embodiment, each of the base 11 and the sealant layer 20 may be a polyolefin film, and the proportion of the total mass of polyolefin in the laminate 1 may be 90% by mass or more. In this case, mono-materialization is realized.

In the present embodiment, the base 11 may be an oriented polypropylene film, and the sealant layer 20 may be a cast polypropylene film. In this case, the laminate 1 is excellent in heat resistance to a retort treatment and the like.

The gas barrier laminate and the packaging thereof according to an aspect of the present disclosure are, for example, as described in the following [1] to [10], and these have been described in detail based on the above-described embodiments and modifications.

[1] A gas barrier laminate including:

a barrier layer having a base on which a barrier coat is provided;
a sealant layer overlapping a first main surface of the barrier layer;
a support layer overlapping a second main surface of the barrier layer;
a first adhesive layer that bonds the barrier layer and the sealant layer; and
a second adhesive layer that bonds the barrier layer and the support layer,
wherein the first adhesive layer includes a two-component curing type urethane adhesive,
the base includes a polyolefin, and
after retort treatment is performed on the gas barrier laminate, an elastic modulus of the first adhesive layer, as measured with a scanning probe microscope, is 5 MPa or more and less than 53 MPa.

[2] The gas barrier laminate according to [1],

wherein the second adhesive layer includes a two-component curing type urethane adhesive, and
after retort treatment is performed on the gas barrier laminate, an elastic modulus of the second adhesive layer, as measured with a scanning probe microscope, is 5 MPa or more and less than 53 MPa.

[3] The gas barrier laminate according to [1] or [2],

wherein the barrier layer further has an anchor coat layer and a vapor deposition layer that are located between the base and the barrier coat, and
the anchor coat layer is located between the base and the vapor deposition layer.

[4] The gas barrier laminate according to [3],
wherein a thickness of the vapor deposition layer is 5 nm or more and 80 nm or less.
[5] The gas barrier laminate according to any one of [1] to [4],
wherein, before the retort treatment is performed, an elastic modulus of the first adhesive layer, as measured with a scanning probe microscope, is 55 MPa or more.
[6] The gas barrier laminate according to any one of [1] to [5],
wherein each of a thickness of the first adhesive layer and a thickness of the second adhesive layer is 0.5 $\mu$m or more and 10 $\mu$m or less.
[7] The gas barrier laminate according to any one of [1] to [6],
wherein an elastic modulus of the sealant layer is 600 MPa or more and 1,400 MPa or less.
[8] The gas barrier laminate according to any one of [1] to [7],

wherein each of the base and the sealant layer is a polyolefin film, and
the proportion of the total mass of polyolefin in the gas barrier laminate is 90% by mass or more.

[9] The gas barrier laminate according to [8],

wherein the base is an oriented polypropylene film, and
the sealant layer is a cast polypropylene film.

[10] A packaging being a packaging bag made from the gas barrier laminate according to any one of [1] to [9].

However, an aspect of the present disclosure is not limited to the above-described embodiments, modifications, and [1] to [10]. An aspect of the present disclosure can be further modified without departing from the scope thereof.
In the above-described embodiments and modifications, the proportion of the total mass of polypropylene in the laminate may be 90% by mass or more. For this reason, for example, in the laminate according to the above-described modification, the mass ratio of polypropylene in one of the base and the support layer may be less than 90% by mass. Alternatively, in the laminate, the mass ratio of polypropylene in the barrier layer may be less than 90% by mass.
In the above-described embodiments and modifications, the anchor coat layer and the vapor deposition layer are provided on/over the base, but the present invention is not limited to this. For example, a vapor deposition layer may be provided on the sealant layer. In this case, an anchor coat layer may be provided between the sealant layer and the vapor deposition layer. At this time, the sealant layer and the anchor coat layer may be a co-extruded layer. Alternatively, the anchor coat layer and the vapor deposition layer may be included on/over the base, and a vapor deposition layer may be provided on the sealant layer.

**Examples**

The present disclosure will be described in more detail with the following examples, but the present disclosure is not limited to these examples.

<Base, Support Layer, and Sealant Layer>

As one combination of a base and a support layer (first combination), a biaxially oriented polypropylene (OPP) film (manufactured by Mitsui Chemicals Tohcello, Inc., product name: ME-1, MD heat shrinkage rate: 2.0%, thickness: 20 $\mu$m) was prepared. As another combination of a base and a support layer (second combination), a biaxially oriented polypropylene (OPP) film (MD heat shrinkage rate: 3.7%, thickness: 20 $\mu$m) was prepared. As yet another combination of a base and a support layer (third combination), a biaxially oriented polypropylene (OPP) film (MD heat shrinkage rate: 6.7%, thickness: 20 $\mu$m) was prepared. In addition, the following five types of sealant layers were prepared as the sealant layer.

First sealant layer: cast polypropylene (CPP) film (manufactured by Toray Advanced Film Co., Ltd., product name: TOREFAN ZK93KM, thickness: 60 $\mu$m)
Second sealant layer: polypropylene laminated film (1) (thickness: 60 $\mu$m)

Third sealant layer: polypropylene laminated film (2) (thickness: 60 $\mu$m)
Fourth sealant layer: polypropylene laminated film (3) (thickness: 60 $\mu$m)
Fifth sealant layer: polypropylene laminated film (4) (thickness: 60 $\mu$m)

Each of the polypropylene laminated film (1) to the polypropylene laminated film (4) has a three-layer structure of a surface layer (10 $\mu$m) / an intermediate layer (40 $\mu$m) / a back layer (10 $\mu$m). Each of the surface layer and the back surface of the polypropylene laminated film (1) is formed from a mixture of homopolypropylene resin (h-PP) and propylene-ethylene random copolymer (r-PP) (h-PP:r-PP = 7:3). Each of the surface layer and the back surface in the polypropylene laminated film (2) to the polypropylene laminated film (3) is formed from r-PP. The intermediate layer of the polypropylene laminated film (1) to the polypropylene laminated film (4) is formed from a propylene-ethylene block copolymer (b-PP). The amount of elastomer (manufactured by Mitsui Chemicals, Inc., Tafmer PN-3560) added to the intermediate layer of the polypropylene laminated film (1) is 31% by mass. No elastomer is added to the intermediate layer of the polypropylene laminated film (2). The amount of elastomer (manufactured by Mitsui Chemicals, Inc., Tafmer PN-3560) added to the intermediate layer of the polypropylene laminated film (3) is 31% by mass. The amount of elastomer (manufactured by Mitsui Chemicals, Inc., Tafmer PN-3560) added to the intermediate layer of the polypropylene laminated film (4) is 55% by mass.

<Preparation of Composition for Forming Adhesion Layer>

A mixed solution was produced by mixing and stirring $\gamma$-isocyanatopropyltrimethoxysilane:acrylic polyol at a ratio of 1:5. Subsequently, tolylene diisocyanate (TDI) was added to the mixed solution such that the number of NCO groups of tolylene diisocyanate was equivalent to the number of OH groups of the acrylic polyol. Then, the mixed solution was diluted with ethyl acetate to 2% by mass. Thereby, a composition for forming an adhesion layer (anchor coating agent) was prepared.

<Preparation of Barrier Coating Solution $\alpha$>

Coating solution $\alpha$ was prepared by preparing 10 g each of the following solutions A, B, and C and mixing them.
Solution A: A hydrolyzed solution with a solid content of 5% by mass (in terms of SiO$_2$) obtained by adding 72.1 g of 0.1 N hydrochloric acid to 17.9 g of tetraethoxysilane (Si(OC$_2$H$_5$)$_4$) and 10 g of methanol and stirring for 30 minutes for hydrolysis.
Solution B: A 5% by mass water/methanol solution of polyvinyl alcohol (mass ratio of water:methanol is 95:5).
Solution C: A hydrolyzed solution in which 1,3,5-tris(3-trialkoxysilylpropyl)isocyanurate was diluted with a mixed solution of water/isopropyl alcohol (mass ratio of water:isopropyl alcohol is 1:1) to a solid content of 5% by mass.

<Preparation of Barrier Coating Solution $\beta$>

First, TEOS, methanol, and 0.1 N hydrochloric acid were mixed to being a mass ratio of 45/15/40 and thereby a TEOS hydrolyzed solution was obtained. Coating solution $\beta$ was prepared by mixing this solution, a 5% by mass aqueous solution of polyvinyl alcohol (hereinafter referred to as "PVA"), and a solution in which 1,3,5-tris(3-methoxysilylpropyl) isocyanurate as a silane coupling agent was diluted with a water/IPA (isopropyl alcohol) = 1/1 solution to a solid content of 5% by mass (in terms of R$^2$Si(OH)$_3$). The coating solution $\beta$ was prepared so that the mass ratio of the SiO$_2$ solid content (converted value) of TEOS, the R$^2$Si(OH)$_3$ solid content (converted value) of isocyanurate silane, and the PVA solid content was 40/5/55.

<Preparation of Barrier Coating Solution $\gamma$>

Coating solution $\gamma$ was prepared by blending the following "Aqueous polyurethane resin": 40 to 75% by mass, "Water-soluble polymer": 10 to 40% by mass, and "Silane coupling agent": 5 to 20% by mass.
Aqueous polyurethane resin: An aqueous dispersion of an aqueous polyurethane resin containing an acid group-containing polyurethane resin and a polyamine compound, an aqueous polyurethane dispersion "TAKELAC (registered trademark) WPB-341" manufactured by Mitsui Chemicals, Inc., solid content ratio 30%.
Water-soluble polymer: Polyvinyl alcohol with a saponification degree of 98 to 99% and a polymerization degree of 500 (product name: Poval PVA-105, manufactured by Kuraray Co., Ltd.).
Silane coupling agent: 3-glycidoxypropyltriethoxysilane (product name: KBE-403, manufactured by Shin-Etsu Chemical Co., Ltd.).

<Preparation of Two-Component Curing Type Urethane Adhesives (a) to (k)>

First, as main agents, the following two types of polyols were prepared. Both main agents contain ethyl acetate as a solvent.

Main agent A: A polyester polyol (molecular weight (Mw): 28,000) obtained by using ethylene glycol and neopentyl glycol in equal amounts as diols and adipic acid as a dicarboxylic acid and polymerizing so that the molar ratio of diol to dicarboxylic acid is 1:1.

Main agent B: A polyester polyurethane polyol (molecular weight (Mw): 27,000) obtained by using ethylene glycol and 1,6-hexanediol in equal amounts as diols and terephthalic acid as a dicarboxylic acid and polymerizing so that the molar ratio of diol to dicarboxylic acid is 1:1.

As a curing agent, a mixture (molar ratio 1:1) of a trimethylolpropane (hereinafter referred to as TMP) adduct of isophorone diisocyanate (hereinafter referred to as IPDI) and a TMP adduct of xylylene diisocyanate (hereinafter referred to as XDI) was prepared. Next, the main agent A and the curing agent were blended so that NOC/OH was 1.5, thereby obtaining a two-component curing type urethane adhesive (a).

As a curing agent, a mixture (molar ratio 1:1) of a TMP adduct of IPDI and a TMP adduct of XDI was prepared. Next, the main agent A and the curing agent were blended so that NOC/OH was 1.8, thereby obtaining a two-component curing type urethane adhesive (b).

As a curing agent, a mixture (molar ratio 2:1) of a TMP adduct of IPDI and a TMP adduct of XDI was prepared. Next, the main agent A and the curing agent were blended so that NOC/OH was 1.5, thereby obtaining a two-component curing type urethane adhesive (c).

As a curing agent, a mixture (molar ratio 3:1) of a TMP adduct of IPDI and a TMP adduct of XDI was prepared. Next, the main agent A and the curing agent were blended so that NOC/OH was 1.5, thereby obtaining a two-component curing type urethane adhesive (d).

As a curing agent, a mixture (molar ratio 3:1) of a TMP adduct of IPDI and a TMP adduct of XDI was prepared. Next, the main agent A and the curing agent were blended so that NOC/OH was 1.8, thereby obtaining a two-component curing type urethane adhesive (e).

As a curing agent, a mixture (molar ratio 3:1) of a TMP adduct of IPDI and a TMP adduct of XDI was prepared. Next, the main agent B and the curing agent were blended so that NOC/OH was 1.8, thereby obtaining a two-component curing type urethane adhesive (f).

As a curing agent, a biuret of hexamethylene diisocyanate (hereinafter referred to as HDI) was prepared. Next, the main agent A and the curing agent were blended so that NOC/OH was 1.5, thereby obtaining a two-component curing type urethane adhesive (g).

As a curing agent, a biuret of HDI was prepared. Next, the main agent A and the curing agent were blended so that NOC/OH was 1.8, thereby obtaining a two-component curing type urethane adhesive (h).

As a curing agent, a TMP adduct of IPDI was prepared. Next, the main agent A and the curing agent were blended so that NOC/OH was 1.5, thereby obtaining a two-component curing type urethane adhesive (i).

As a curing agent, a TMP adduct of IPDI was prepared. Next, the main agent A and the curing agent were blended so that NOC/OH was 1.8, thereby obtaining a two-component curing type urethane adhesive (j).

As a curing agent, a TMP adduct of IPDI was prepared. Next, the main agent B and the curing agent were blended so that NOC/OH was 1.8, thereby obtaining a two-component curing type urethane adhesive (k).

(Example 1)

A composition for forming an adhesion layer was applied to a base using a bar coater, and the composition for forming an adhesion layer was dried at 50°C. Thereby, an adhesion layer with a thickness of 0.2 $\mu$m (an anchor coat layer) was formed. Next, a transparent vapor deposition layer (silica vapor deposition layer) made of silicon oxide with a thickness of 40 nm was formed with a vacuum deposition apparatus of an electron beam heating type.

Next, coating solution $\alpha$ was applied onto the vapor deposition layer using a bar coater, and the coating solution $\alpha$ was dried at 60°C for 1 minute. Thereby, a barrier coat with a thickness of 300 nm was formed on the vapor deposition layer. From the foregoing, the barrier layer having the base, the adhesion layer, the vapor deposition layer, and the barrier coat was formed.

Next, the two-component curing type urethane adhesive (a) was applied onto the barrier coat of the barrier layer to form an adhesive layer (second adhesive layer) with a thickness of 3 $\mu$m. Next, a support layer was laminated onto the adhesive layer by a dry lamination method. Next, the two-component curing type urethane adhesive (a) was applied onto the base of the barrier layer to form an adhesive layer (first adhesive layer) with a thickness of 3 $\mu$m. Next, the first sealant layer was laminated onto the adhesive layer by a dry lamination method. Thereby, a laminate (gas barrier laminate) having a laminated structure of the support layer, the second adhesive layer, the barrier coat, the vapor deposition layer, the adhesion layer, the base, the first adhesive layer, and the first sealant layer was produced. The polypropylene content in the obtained laminate was 90% by mass or more.

(Examples 2 to 8)

Laminates of Examples 2 to 8 were produced in the same manner as in Example 1, except that two-component curing type urethane adhesives (b) to (h) were used instead of the adhesive (a), respectively.

(Examples 9 to 16)

Laminates of Examples 9 to 16 were produced in the same manner as in Examples 1 to 8, respectively, except that the coating solution β was used instead of the coating solution α.

(Examples 17 to 24)

Laminates of Examples 17 to 24 were produced in the same manner as in Examples 1 to 8, respectively, except that the coating solution γ was used instead of the coating solution α.

(Examples 25 to 32)

Laminates of Examples 25 to 32 were produced in the same manner as in Examples 1 to 8, respectively, except that the second combination was used as the combination of the base and the support layer, and the coating solution β was used instead of the coating solution α.

(Examples 33 to 40)

Laminates of Examples 33 to 40 were produced in the same manner as in Examples 1 to 8, respectively, except that the third combination was used as the combination of the base and the support layer, and the coating solution β was used instead of the coating solution α.

(Examples 41 to 48)

Laminates of Examples 41 to 48 were produced in the same manner as in Examples 1 to 8, respectively, except that the second sealant layer was used as the sealant layer, and the coating solution β was used instead of the coating solution α.

(Examples 49 to 56)

Laminates of Examples 49 to 56 were produced in the same manner as in Examples 1 to 8, respectively, except that the third sealant layer was used as the sealant layer, and the coating solution β was used instead of the coating solution α.

(Examples 57 to 64)

Laminates of Examples 57 to 64 were produced in the same manner as in Examples 1 to 8, respectively, except that the fourth sealant layer was used as the sealant layer, and the coating solution β was used instead of the coating solution α.

(Examples 65 to 72)

Laminates of Examples 65 to 72 were produced in the same manner as in Examples 1 to 8, respectively, except that the fifth sealant layer was used as the sealant layer, and the coating solution β was used instead of the coating solution α.

(Examples 73 to 80)

Laminates of Examples 73 to 80 were produced in the same manner as in Examples 9 to 16, respectively, except that the lamination order was changed to the support layer, the second adhesive layer, the base, the adhesion layer, the vapor deposition layer, the barrier coat, the first adhesive layer, and the first sealant layer.

(Comparative Examples 1 to 3)

Laminates of Comparative Examples 1 to 3 were produced in the same manner as in Example 1, except that two-component curing type urethane adhesives (i) to (k) were used instead of the adhesive (a), respectively.

(Comparative Examples 4 to 6)

Laminates of Comparative Examples 4 to 6 were produced in the same manner as in Example 9, except that two-component curing type urethane adhesives (i) to (k) were used instead of the adhesive (a), respectively.

(Comparative Examples 7 to 9)

Laminates of Comparative Examples 7 to 9 were produced in the same manner as in Example 17, except that two-component curing type urethane adhesives (i) to (k) were used instead of the adhesive (a), respectively.

(Comparative Examples 10 to 12)

Laminates of Comparative Examples 10 to 12 were produced in the same manner as in Example 25, except that two-component curing type urethane adhesives (i) to (k) were used instead of the adhesive (a), respectively.

(Comparative Examples 13 to 15)

Laminates of Comparative Examples 13 to 15 were produced in the same manner as in Example 33, except that two-component curing type urethane adhesives (i) to (k) were used instead of the adhesive (a), respectively.

(Comparative Examples 16 to 18)

Laminates of Comparative Examples 16 to 18 were produced in the same manner as in Example 41, except that two-component curing type urethane adhesives (i) to (k) were used instead of the adhesive (a), respectively.

(Comparative Examples 19 to 21)

Laminates of Comparative Examples 19 to 21 were produced in the same manner as in Example 49, except that two-component curing type urethane adhesives (i) to (k) were used instead of the adhesive (a), respectively.

(Comparative Examples 22 to 24)

Laminates of Comparative Examples 22 to 24 were produced in the same manner as in Example 57, except that two-component curing type urethane adhesives (i) to (k) were used instead of the adhesive (a), respectively.

(Comparative Examples 25 to 27)

Laminates of Comparative Examples 25 to 27 were produced in the same manner as in Example 65, except that two-component curing type urethane adhesives (i) to (k) were used instead of the adhesive (a), respectively.

(Comparative Examples 28 to 30)

Laminates of Comparative Examples 28 to 30 were produced in the same manner as in Comparative Examples 4 to 6, respectively, except that the lamination order was changed to the support layer, the second adhesive layer, the base, the adhesion layer, the vapor deposition layer, the barrier coat, the first adhesive layer, and the first sealant layer.

<Method for Measuring Heat Shrinkage Rate of Base>

The heat shrinkage rate of the base included in the barrier layer was measured according to the following procedure. The measurement results of the heat shrinkage rate of the base in Examples 1 to 8 and Comparative Examples 1 to 3 are shown in Table 1 below. The measurement results of the heat shrinkage rate of the base in Examples 9 to 16 and Comparative Examples 4 to 6 are shown in Table 2 below. The measurement results of the heat shrinkage rate of the base in Examples 17 to 24 and Comparative Examples 7 to 9 are shown in Table 3 below. The measurement results of the heat shrinkage rate of the base in Examples 25 to 32 and Comparative Examples 10 to 12 are shown in Table 4 below. The measurement results of the heat shrinkage rate of the base in Examples 33 to 40 and Comparative Examples 13 to 15 are shown in Table 5 below. The measurement results of the heat shrinkage rate of the base in Examples 41 to 48 and Comparative Examples 16 to 18 are shown in Table 6 below. The measurement results of the heat shrinkage rate of the base in Examples 49 to 56 and Comparative Examples 19 to 21 are shown in Table 7 below. The measurement results of the heat shrinkage rate of the base in Examples 57 to 64 and Comparative Examples 22 to 24 are shown in Table 8 below. The measurement results of the heat shrinkage rate of the base in Examples 65 to 72 and Comparative Examples 25 to 27 are shown in Table 9 below. The measurement results of the heat shrinkage rate of the base in Examples 73 to 80 and Comparative Examples 28 to 30 are shown in Table 10 below.

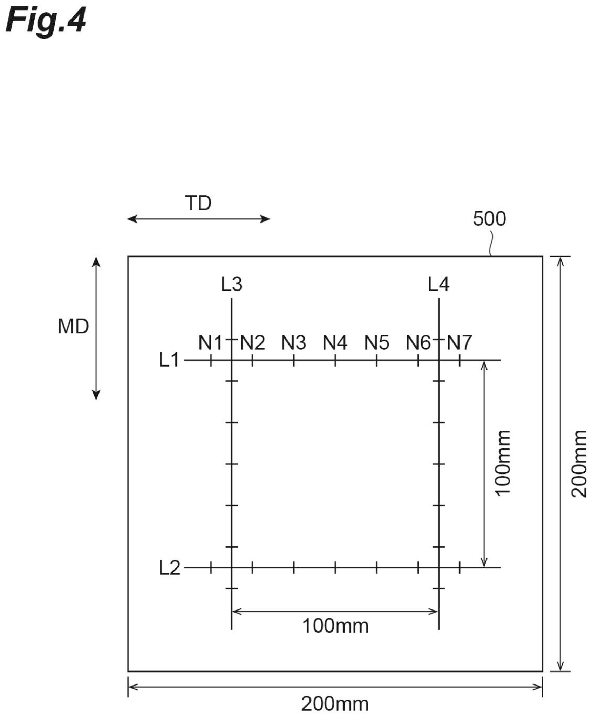

(a) As shown in Fig. 4, the base itself, which was the measurement target, was cut into a size of 200 mm × 200 mm to obtain a measurement sample 500.
(b) As shown in Fig. 4, two straight lines L1 and L2 with a length of 120 mm or more parallel to the TD direction of the measurement sample 500 were drawn with an interval of 100 mm.
(c) As shown in Fig. 4, two straight lines L3 and L4 with a length of 120 mm or more parallel to the MD direction of the measurement sample 500 were drawn with an interval of 100 mm.
(d) As shown in Fig. 4, scales N1 to N7 of seven locations were drawn at 20 mm intervals on the straight line L1. Scales were similarly drawn on the straight lines L2 to L4. At this time, the positions of the scales on the straight lines L1 and L2 were aligned so that when each of the scales N1 to N7 on the straight line L1 and each of the scales N1 to N7 on the straight line L2 were connected by a straight line, the straight line would be parallel to the MD direction. Also, the positions of the scales on the straight lines L3 and L4 were aligned so that when each of the scales N1 to N7 on the straight line L3 and each of the scales N1 to N7 on the straight line L4 were connected by a straight line, the straight line would be parallel to the TD direction.
(e) The measurement sample 500, placed on a Teflon (registered trademark) sheet, was placed on a glass plate in an oven heated to a predetermined temperature (150°C or 160°C) and heated for 15 minutes. After heating, the measurement sample 500 was taken out of the oven and left at room temperature (25°C) for 30 minutes.
(f) The straight-line distance between the scale N1 on the straight line L1 (intersection of L1 and N1) and the scale N1 on the straight line L2 (intersection of L2 and N1) was measured before and after heating as the MD direction length, and the MD direction heat shrinkage rate was calculated using following formula (1). Similarly, the MD direction heat shrinkage rate at each position of the scales N1 to N7 was determined, and their average value was taken as the MD direction heat shrinkage rate of the measurement sample 500.

MD direction heat shrinkage rate (%) = (MD direction length before heating - MD direction length after heating) / MD direction length before heating × 100      (1)

<Retort Treatment>

Using the laminates produced in each Example and each Comparative Example, packagings with four sealed sides were produced. The packagings were filled with water as contents. Thereafter, a retort sterilization treatment was performed at 130°C for 60 minutes.

<Elastic Modulus Measurement of First Adhesive Layer>

In each of Examples 1 to 80 and Comparative Examples 1 to 30, a laminate that was a part of the packaging after a retort treatment was cut out. Then, a cross-sectional sample in which a cross-section of the first adhesive layer was exposed was prepared from the cut-out laminate by the following method.

<Cross-Sectional Sample Preparation>

First, the front and back surfaces of the cut-out laminate were subjected to corona treatment. Subsequently, the laminate was cut into a strip shape of 2 mm × 3 mm with a razor blade, and then the cut film piece was embedded in a resin. As the resin, a visible light-curing resin (manufactured by Toagosei Co., Ltd., "ARONIX LCR D-800") was used. After embedding the film piece in the resin, the resin was cured by light irradiation. After the resin was cured, the film piece embedded in the resin was fixed with an insert for an SPM sample holder. Subsequently, trimming the fixed film piece and cutting on the cross section thereof were performed with a glass knife at room temperature (25°C). Subsequently, with the cutting speed set to 3 mm/s and the cutting thickness set to 500 nm, cutting on the cross section was performed with a diamond knife until a mirror surface was obtained. An ultramicrotome (manufactured by Leica Microsystems, EM UC7) was used as the cross section cutting apparatus. The cutting direction was a direction horizontal to the interface of each layer included in the film piece. Shape measurement and elastic modulus measurement of the sample with an exposed cross-section (cross-sectional sample) were performed with being fixed with the insert for an SPM sample holder.

<Elastic Modulus Measurement>

Next, the elastic modulus of the first adhesive layer was measured by the following method using a scanning probe microscope (SPM). Shape measurement and elastic modulus measurement were performed on the cross-sectional sample by SPM (scanning probe microscope). As the SPM, "Jupiter XR (product name)" manufactured by Oxford Instruments was used. As the cantilever (measurement probe) of the SPM, "biosphere B30-FM (product name)" (tip radius: 30 nm, spring constant: 2.8 N/m) manufactured by nanotools was used. In the measurement of the cross-sectional sample and the calculation of the elastic modulus of the first adhesive layer, the individual characteristic value of the product was referred to for the tip radius of the cantilever, and values obtained by the GetReal method, which is a calibration function of the SPM, were used for the spring constant and optical lever sensitivity of the cantilever.

First, shape measurement was performed by scanning the cross-sectional sample perpendicularly to the layer interface thereof under the conditions of a field of view of 1 $\mu$m $\times$ 1 $\mu$m and a scanning speed of 2 Hz in the AC mode (tapping mode) of the SPM. Here, the center of the field of view was set to be the center of the film thickness of the cross-section of the first adhesive layer. Next, a force curve (load-displacement curve) was obtained when the cantilever was pushed into and pulled out from the first adhesive layer under the conditions of a maximum load of 10 nN and a test speed of 500 nm/s in the contact mode of the SPM. A total of 100 force curves were obtained at 10 points vertically $\times$ 10 points horizontally at 100 nm intervals in the field of view. Force curves with a displacement of 500 nm or more were obtained for both pushing in and pulling out of the cantilever. For the cross-sectional sample, this was performed at two locations for each sample level, and a total of 200 force curves were obtained. The elastic modulus of the cantilever was assumed to be 865 GPa, the Poisson's ratio was assumed to be 0.2, and the Poisson's ratio of the first adhesive layer was assumed to be 0.33.

The obtained force curves were analyzed using an elastic contact model of the JKR (Johnson-Kendall-Roberts) theory to calculate the elastic modulus of the first adhesive layer. The calculation of the elastic modulus by the JKR theory was performed by a fitting analysis using the analysis software of the SPM with the elastic modulus of the sample, the displacement origin, and the maximum adhesion force as fitting parameters. The analysis range for each force curve was the range from the load and displacement when the load first reached "(maximum load - minimum load) $\times$ 0.65 + minimum load" as the starting point, to the load and displacement when the minimum load was reached as the end point, in the load change during withdrawal after reaching the maximum load.

By the above procedure, the average value of the elastic moduli of 200 force curves obtained for each sample level was calculated. The measurement results of the elastic modulus of the first adhesive layer in each Example and each Comparative Example are shown in Tables 1 to 10 below. In each Example and each Comparative Example, the elastic modulus of the second adhesive layer can be considered to be the same as the elastic modulus of the corresponding first adhesive layer.

(Oxygen Transmission Rate Measurement)

The oxygen transmission rate (OTR) of the laminate after a retort treatment was measured. The measurement was performed using an oxygen transmission rate measuring device (manufactured by Modern Control, Inc., OX-TRAN® 2/20) under the conditions of a temperature of 30°C and a relative humidity of 70%. The OTR measurement method was in accordance with JIS K-7126, Method B (equal pressure method), and ASTM D3985-81, and the measured value of OTR was expressed in the unit [cc/m$^2$·day·atm]. The measurement results of OTR for each Example and each Comparative Example are shown in Tables 1 to 10 below.

[Table 1]

| | First adhesive layer | Coating solution | Second adhesive layer | Heat shrinkage rate of base (%) | OTR | Elastic modulus of first adhesive layer (MPa) |
|---|---|---|---|---|---|---|
| Example 1 | Adhesive (a) | $\alpha$ | Adhesive (a) | 2.0 | 2.5 | 42 |
| Example 2 | Adhesive (b) | $\alpha$ | Adhesive (b) | 2.0 | 2.5 | 43 |
| Example 3 | Adhesive (c) | $\alpha$ | Adhesive (c) | 2.0 | 4.0 | 47 |
| Example 4 | Adhesive (d) | $\alpha$ | Adhesive (d) | 2.0 | 4.5 | 49 |

(continued)

|  | First adhesive layer | Coating solution | Second adhesive layer | Heat shrinkage rate of base (%) | OTR | Elastic modulus of first adhesive layer (MPa) |
|---|---|---|---|---|---|---|
| Example 5 | Adhesive (e) | α | Adhesive (e) | 2.0 | 5.0 | 50 |
| Example 6 | Adhesive (f) | α | Adhesive (f) | 2.0 | 6.0 | 51 |
| Example 7 | Adhesive (g) | α | Adhesive (g) | 2.0 | 6.8 | 6 |
| Example 8 | Adhesive (h) | α | Adhesive (h) | 2.0 | 7.4 | 9 |
| Comparative Example 1 | Adhesive (i) | α | Adhesive (i) | 2.0 | 10.0 | 53 |
| Comparative Example 2 | Adhesive (j) | α | Adhesive (j) | 2.0 | 10.5 | 54 |
| Comparative Example 3 | Adhesive (k) | α | Adhesive (k) | 2.0 | 11.0 | 55 |

[Table 2]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 9 | Adhesive (a) | β | Adhesive (a) | 2.0 | 0.8 | 42 |
| Example 10 | Adhesive (b) | β | Adhesive (b) | 2.0 | 0.8 | 43 |
| Example 11 | Adhesive (c) | β | Adhesive (c) | 2.0 | 1.0 | 47 |
| Example 12 | Adhesive (d) | β | Adhesive (d) | 2.0 | 1.5 | 49 |
| Example 13 | Adhesive (e) | β | Adhesive (e) | 2.0 | 2.0 | 50 |
| Example 14 | Adhesive (f) | β | Adhesive (f) | 2.0 | 2.0 | 51 |
| Example 15 | Adhesive (g) | β | Adhesive (g) | 2.0 | 2.3 | 6 |
| Example 16 | Adhesive (h) | β | Adhesive (h) | 2.0 | 2.5 | 9 |
| Comparative Example 4 | Adhesive (i) | β | Adhesive (i) | 2.0 | 4.0 | 53 |
| Comparative Example 5 | Adhesive (j) | β | Adhesive (j) | 2.0 | 4.0 | 54 |
| Comparative Example 6 | Adhesive (k) | β | Adhesive (k) | 2.0 | 4.5 | 55 |

[Table 3]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 17 | Adhesive (a) | γ | Adhesive (a) | 2.0 | 0.8 | 42 |
| Example 18 | Adhesive (b) | γ | Adhesive (b) | 2.0 | 0.8 | 43 |
| Example 19 | Adhesive (c) | γ | Adhesive (c) | 2.0 | 1.0 | 47 |
| Example 20 | Adhesive (d) | γ | Adhesive (d) | 2.0 | 1.0 | 49 |
| Example 21 | Adhesive (e) | γ | Adhesive (e) | 2.0 | 1.5 | 50 |
| Example 22 | Adhesive (f) | γ | Adhesive (f) | 2.0 | 2.0 | 51 |
| Example 23 | Adhesive (g) | γ | Adhesive (g) | 2.0 | 2.3 | 6 |
| Example 24 | Adhesive (h) | γ | Adhesive (h) | 2.0 | 2.5 | 9 |
| Comparative Example 7 | Adhesive (i) | γ | Adhesive (i) | 2.0 | 3.5 | 53 |

(continued)

|  | First adhesive layer | Coating solution | Second adhesive layer | Heat shrinkage rate of base (%) | OTR | Elastic modulus of first adhesive layer (MPa) |
|---|---|---|---|---|---|---|
| Comparative Example 8 | Adhesive (j) | γ | Adhesive (j) | 2.0 | 4.0 | 54 |
| Comparative Example 9 | Adhesive (k) | γ | Adhesive (k) | 2.0 | 4.0 | 55 |

[Table 4]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 25 | Adhesive (a) | β | Adhesive (a) | 3.7 | 1.2 | 42 |
| Example 26 | Adhesive (b) | β | Adhesive (b) | 3.7 | 1.2 | 43 |
| Example 27 | Adhesive (c) | β | Adhesive (c) | 3.7 | 1.5 | 47 |
| Example 28 | Adhesive (d) | β | Adhesive (d) | 3.7 | 1.5 | 49 |
| Example 29 | Adhesive (e) | β | Adhesive (e) | 3.7 | 1.7 | 50 |
| Example 30 | Adhesive (f) | β | Adhesive (f) | 3.7 | 2.3 | 51 |
| Example 31 | Adhesive (g) | β | Adhesive (g) | 3.7 | 2.7 | 6 |
| Example 32 | Adhesive (h) | β | Adhesive (h) | 3.7 | 2.9 | 9 |
| Comparative Example 10 | Adhesive (i) | β | Adhesive (i) | 3.7 | 5.7 | 53 |
| Comparative Example 11 | Adhesive (j) | β | Adhesive (j) | 3.7 | 6.2 | 54 |
| Comparative Example 12 | Adhesive (k) | β | Adhesive (k) | 3.7 | 6.2 | 55 |

[Table 5]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 33 | Adhesive (a) | β | Adhesive (a) | 6.7 | 1.6 | 42 |
| Example 34 | Adhesive (b) | β | Adhesive (b) | 6.7 | 1.6 | 43 |
| Example 35 | Adhesive (c) | β | Adhesive (c) | 6.7 | 2.1 | 47 |
| Example 36 | Adhesive (d) | β | Adhesive (d) | 6.7 | 2.1 | 49 |
| Example 37 | Adhesive (e) | β | Adhesive (e) | 6.7 | 2.5 | 50 |
| Example 38 | Adhesive (f) | β | Adhesive (f) | 6.7 | 3.1 | 51 |
| Example 39 | Adhesive (g) | β | Adhesive (g) | 6.7 | 3.5 | 6 |
| Example 40 | Adhesive (h) | β | Adhesive (h) | 6.7 | 3.9 | 9 |
| Comparative Example 13 | Adhesive (i) | β | Adhesive (i) | 6.7 | 6.7 | 53 |
| Comparative Example 14 | Adhesive (j) | β | Adhesive (j) | 6.7 | 7.2 | 54 |
| Comparative Example 15 | Adhesive (k) | β | Adhesive (k) | 6.7 | 7.2 | 55 |

[Table 6]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 41 | Adhesive (a) | β | Adhesive (a) | 2.0 | 0.8 | 42 |
| Example 42 | Adhesive (b) | β | Adhesive (b) | 2.0 | 0.8 | 43 |
| Example 43 | Adhesive (c) | β | Adhesive (c) | 2.0 | 1.0 | 47 |
| Example 44 | Adhesive (d) | β | Adhesive (d) | 2.0 | 1.0 | 49 |
| Example 45 | Adhesive (e) | β | Adhesive (e) | 2.0 | 1.5 | 50 |
| Example 46 | Adhesive (f) | β | Adhesive (f) | 2.0 | 2.0 | 51 |
| Example 47 | Adhesive (g) | β | Adhesive (g) | 2.0 | 2.3 | 6 |
| Example 48 | Adhesive (h) | β | Adhesive (h) | 2.0 | 2.5 | 9 |
| Comparative Example 16 | Adhesive (i) | β | Adhesive (i) | 2.0 | 3.5 | 53 |
| Comparative Example 17 | Adhesive (j) | β | Adhesive (j) | 2.0 | 4.0 | 54 |
| Comparative Example 18 | Adhesive (k) | β | Adhesive (k) | 2.0 | 4.0 | 55 |

[Table 7]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 49 | Adhesive (a) | β | Adhesive (a) | 2.0 | 0.7 | 42 |
| Example 50 | Adhesive (b) | β | Adhesive (b) | 2.0 | 0.7 | 43 |
| Example 51 | Adhesive (c) | β | Adhesive (c) | 2.0 | 0.8 | 47 |
| Example 52 | Adhesive (d) | β | Adhesive (d) | 2.0 | 0.8 | 49 |
| Example 53 | Adhesive (e) | β | Adhesive (e) | 2.0 | 1.2 | 50 |
| Example 54 | Adhesive (f) | β | Adhesive (f) | 2.0 | 1.5 | 51 |
| Example 55 | Adhesive (g) | β | Adhesive (g) | 2.0 | 1.8 | 6 |
| Example 56 | Adhesive (h) | β | Adhesive (h) | 2.0 | 2.2 | 9 |
| Comparative Example 19 | Adhesive (i) | β | Adhesive (i) | 2.0 | 3.1 | 53 |
| Comparative Example 20 | Adhesive (j) | β | Adhesive (j) | 2.0 | 3.5 | 54 |
| Comparative Example 21 | Adhesive (k) | β | Adhesive (k) | 2.0 | 3.5 | 55 |

[Table 8]

|  | First adhesive layer | Coating solution | Second adhesive layer | Heat shrinkage rate of base (%) | OTR | Elastic modulus of first adhesive layer (MPa) |
|---|---|---|---|---|---|---|
| Example 57 | Adhesive (a) | β | Adhesive (a) | 2.0 | 1.1 | 42 |
| Example 58 | Adhesive (b) | β | Adhesive (b) | 2.0 | 1.1 | 43 |
| Example 59 | Adhesive (c) | β | Adhesive (c) | 2.0 | 1.4 | 47 |
| Example 60 | Adhesive (d) | β | Adhesive (d) | 2.0 | 1.4 | 49 |
| Example 61 | Adhesive (e) | β | Adhesive (e) | 2.0 | 1.7 | 50 |

(continued)

| | First adhesive layer | Coating solution | Second adhesive layer | Heat shrinkage rate of base (%) | OTR | Elastic modulus of first adhesive layer (MPa) |
|---|---|---|---|---|---|---|
| Example 62 | Adhesive (f) | β | Adhesive (f) | 2.0 | 2.2 | 51 |
| Example 63 | Adhesive (g) | β | Adhesive (g) | 2.0 | 2.7 | 6 |
| Example 64 | Adhesive (h) | β | Adhesive (h) | 2.0 | 2.9 | 9 |
| Comparative Example 22 | Adhesive (i) | β | Adhesive (i) | 2.0 | 3.9 | 53 |
| Comparative Example 23 | Adhesive (j) | β | Adhesive (j) | 2.0 | 4.3 | 54 |
| Comparative Example 24 | Adhesive (k) | β | Adhesive (k) | 2.0 | 4.3 | 55 |

[Table 9]

| | First adhesive layer | Coating solution | Second adhesive layer | Heat shrinkage rate of base (%) | OTR | Elastic modulus of first adhesive layer (MPa) |
|---|---|---|---|---|---|---|
| Example 65 | Adhesive (a) | β | Adhesive (a) | 2.0 | 1.5 | 42 |
| Example 66 | Adhesive (b) | β | Adhesive (b) | 2.0 | 1.5 | 43 |
| Example 67 | Adhesive (c) | β | Adhesive (c) | 2.0 | 1.9 | 47 |
| Example 68 | Adhesive (d) | β | Adhesive (d) | 2.0 | 1.9 | 49 |
| Example 69 | Adhesive (e) | β | Adhesive (e) | 2.0 | 2.2 | 50 |
| Example 70 | Adhesive (f) | β | Adhesive (f) | 2.0 | 2.5 | 51 |
| Example 71 | Adhesive (g) | β | Adhesive (g) | 2.0 | 2.7 | 6 |
| Example 72 | Adhesive (h) | β | Adhesive (h) | 2.0 | 3.1 | 9 |
| Comparative Example 25 | Adhesive (i) | β | Adhesive (i) | 2.0 | 4.1 | 53 |
| Comparative Example 26 | Adhesive (j) | β | Adhesive (j) | 2.0 | 4.5 | 54 |
| Comparative Example 27 | Adhesive (k) | β | Adhesive (k) | 2.0 | 4.5 | 55 |

[Table 10]

| | First adhesive layer | Coating solution | Second adhesive layer | Heat shrinkage rate of base (%) | OTR | Elastic modulus of first adhesive layer (MPa) |
|---|---|---|---|---|---|---|
| Example 73 | Adhesive (a) | β | Adhesive (a) | 2.0 | 0.8 | 42 |
| Example 74 | Adhesive (b) | β | Adhesive (b) | 2.0 | 0.8 | 43 |
| Example 75 | Adhesive (c) | β | Adhesive (c) | 2.0 | 1.0 | 47 |
| Example 76 | Adhesive (d) | β | Adhesive (d) | 2.0 | 1.5 | 49 |
| Example 77 | Adhesive (e) | β | Adhesive (e) | 2.0 | 2.0 | 50 |
| Example 78 | Adhesive (f) | β | Adhesive (f) | 2.0 | 2.0 | 51 |
| Example 79 | Adhesive (g) | β | Adhesive (g) | 2.0 | 2.3 | 6 |
| Example 80 | Adhesive (h) | β | Adhesive (h) | 2.0 | 2.5 | 9 |
| Comparative Example 28 | Adhesive (i) | β | Adhesive (i) | 2.0 | 4.0 | 53 |
| Comparative Example 29 | Adhesive (j) | β | Adhesive (j) | 2.0 | 4.0 | 54 |

(continued)

| | First adhesive layer | Coating solution | Second adhesive layer | Heat shrinkage rate of base (%) | OTR | Elastic modulus of first adhesive layer (MPa) |
|---|---|---|---|---|---|---|
| Comparative Example 30 | Adhesive (k) | β | Adhesive (k) | 2.0 | 4.5 | 55 |

As shown in Tables 1 to 3, the oxygen transmission rates of the Examples and Comparative Examples using the coating solution β or the coating solution γ are lower than those of the Examples and Comparative Examples using the coating solution α.

As shown in Tables 1 to 3, when the base is an OPP film, the higher the elastic modulus of the first adhesive layer exceeds 43 MPa, the higher the measured oxygen transmission rate of the laminate becomes. In particular, as shown in Tables 1 to 3, the oxygen transmission rate when the elastic modulus of the first adhesive layer is 53 MPa or more tends to increase sharply compared to the oxygen transmission rate when the elastic modulus of the first adhesive layer is less than 53 MPa. For example, when comparing Example 6 and Comparative Example 1, the oxygen transmission rate of Comparative Example 1 is 1.6 times or more that of Example 6. Also, when comparing Example 22 and Comparative Example 7, the oxygen transmission rate of Comparative Example 7 is 1.5 times or more that of Example 22. Also, when the elastic modulus of the first adhesive layer is less than 10 MPa, the oxygen transmission rate is also relatively high. It is presumed that this is due to adverse effects of the first adhesive layer being too soft. From the above results, it can be inferred that by adjusting the elastic modulus of the first adhesive layer to an appropriate extent, a laminate showing a good oxygen transmission rate can be obtained regardless of the type of coating solution.

<Elastic Modulus of Sealant Layer>

A 20 mm square sample was formed from each of the first to fifth sealant layers. Subsequently, using a table-top precision universal testing machine (AUTOGRAPH AGS-X 5kN, manufactured by Shimadzu Corporation), the elastic modulus (elastic modulus in the MD direction and elastic modulus in the TD direction) of the first to fifth sealant layers was measured from the tensile stress measured when each sample was stretched by 0.05% to 0.25% under the conditions of temperature: 30°C, humidity: 70%, gauge length: 250 mm, and tensile speed: 5 m/min. The measurement results of the elastic modulus in the MD direction and the elastic modulus in the TD direction for each of the first to fifth sealant layers are shown in Table 11 below.

<Filling Suitability>

Using the laminates produced in each Example and each Comparative Example, three-side-seal bags of 95 mm × 140 mm size were produced, leaving one of the short sides open. Subsequently, 70 g of water was filled using a pouch-filling and packaging machine, and then the opening of the three-side-seal bag was heat-sealed to produce 1000 packagings. Then, whether the packagings were non-defective was confirmed by the presence or absence of water leakage from the sealed part. The evaluation of filling suitability in each Example and each Comparative Example was performed based on the following evaluation criteria. The evaluation results for each Example are shown in Table 12 below, and the evaluation results for each Comparative Example are shown in Table 13 below.

[Evaluation Criteria]

A: Non-defective rate of 98% or more
B: Non-defective rate of 95% or more and less than 98%
C: Non-defective rate of less than 95%

<Durability Evaluation of Packaging>

Using the laminates produced in each Example and each Comparative Example, three-side-seal bags of 95 mm × 140 mm size were produced. After filling these three-side-seal bags with 70 g of water, the three-side-seal bags were heat-sealed. Thereafter, a retort sterilization treatment was performed at 128°C for 15 minutes to produce test samples. In each Example and each Comparative Example, 100 test samples were produced. Subsequently, in each Example and each Comparative Example, let the 100 test samples free fall from a position with a height of 100 cm from the floor surface, with the test sample horizontal to the floor surface. This free fall was repeated 100 times. Thereafter, the durability of the packagings was evaluated based on the survival rate of the test samples that did not rupture. The evaluation of the durability of the packagings in each Example and each Comparative Example was performed based on the following evaluation criteria. The evaluation results for each Example are shown in Table 12 below, and the evaluation results for each Comparative Example are shown in Table 13 below.

[Evaluation Criteria]

A: Survival rate of 100%

B: Survival rate of 95% or more and less than 100%

[Table 11]

|  | Elastic modulus [MPa] | |
| --- | --- | --- |
|  | MD | TD |
| 1st sealant layer | 826 | 666 |
| 2nd sealant layer | 926 | 907 |
| 3rd sealant layer | 1312 | 1093 |
| 4th sealant layer | 753 | 668 |
| 5th sealant layer | 581 | 515 |

[Table 12]

|  | Filling Suitability | Durability |  | Filling Suitability | Durability |  | Filling Suitability | Durability |
| --- | --- | --- | --- | --- | --- | --- | --- | --- |
| Example 1 | A | A | Example 29 | A | A | Example 57 | B | A |
| Example 2 | A | A | Example 30 | A | A | Example 58 | B | A |
| Example 3 | A | A | Example 31 | A | A | Example 59 | B | A |
| Example 4 | A | A | Example 32 | A | A | Example 60 | B | A |
| Example 5 | A | A | Example 33 | A | A | Example 61 | B | A |
| Example 6 | A | A | Example 34 | A | A | Example 62 | B | A |
| Example 7 | A | A | Example 35 | A | A | Example 63 | B | A |
| Example 8 | A | A | Example 36 | A | A | Example 64 | B | A |
| Example 9 | A | A | Example 37 | A | A | Example 65 | C | A |
| Example 10 | A | A | Example 38 | A | A | Example 66 | C | A |

(continued)

| | Filling Suitability | Durability | | Filling Suitability | Durability | | Filling Suitability | Durability |
|---|---|---|---|---|---|---|---|---|
| Example 11 | A | A | Example 39 | A | A | Example 67 | C | A |
| Example 12 | A | A | Example 40 | A | A | Example 68 | C | A |
| Example 13 | A | A | Example 41 | A | A | Example 69 | C | A |
| Example 14 | A | A | Example 42 | A | A | Example 70 | C | A |
| Example 15 | A | A | Example 43 | A | A | Example 71 | C | A |
| Example 16 | A | A | Example 44 | A | A | Example 72 | C | A |
| Example 17 | A | A | Example 45 | A | A | Example 73 | A | A |
| Example 18 | A | A | Example 46 | A | A | Example 74 | A | A |
| Example 19 | A | A | Example 47 | A | A | Example 75 | A | A |
| Example 20 | A | A | Example 48 | A | A | Example 76 | A | A |
| Example 21 | A | A | Example 49 | A | B | Example 77 | A | A |
| Example 22 | A | A | Example 50 | A | B | Example 78 | A | A |
| Example 23 | A | A | Example 51 | A | B | Example 79 | A | A |
| Example 24 | A | A | Example 52 | A | B | Example 80 | A | A |
| Example 25 | A | A | Example 53 | A | B | | | |
| Example 26 | A | A | Example 54 | A | B | | | |
| Example 27 | A | A | Example 55 | A | B | | | |
| Example 28 | A | A | Example 56 | A | B | | | |

[Table 13]

| | Filling Suitability | Durability | | Filling Suitability | Durability |
|---|---|---|---|---|---|
| Comparative Example 1 | A | A | Comparative Example 16 | A | A |
| Comparative Example 2 | A | A | Comparative Example 17 | A | A |
| Comparative Example 3 | A | A | Comparative Example 18 | A | A |
| Comparative Example 4 | A | A | Comparative Example 19 | A | B |
| Comparative Example 5 | A | A | Comparative Example 20 | A | B |

(continued)

|  | Filling Suitability | Durability |  | Filling Suitability | Durability |
|---|---|---|---|---|---|
| Comparative Example 6 | A | A | Comparative Example 21 | A | B |
| Comparative Example 7 | A | A | Comparative Example 22 | B | A |
| Comparative Example 8 | A | A | Comparative Example 23 | B | A |
| Comparative Example 9 | A | A | Comparative Example 24 | B | A |
| Comparative Example 10 | A | A | Comparative Example 25 | C | A |
| Comparative Example 11 | A | A | Comparative Example 26 | C | A |
| Comparative Example 12 | A | A | Comparative Example 27 | C | A |
| Comparative Example 13 | A | A | Comparative Example 28 | A | A |
| Comparative Example 14 | A | A | Comparative Example 29 | A | A |
| Comparative Example 15 | A | A | Comparative Example 30 | A | A |

From Tables 12 and 13 above, in Examples 57 to 72 and Comparative Examples 22 to 27, the filling suitability of the packagings was lower compared to Examples 1 to 56, 73 to 80, and others. In particular, the filling suitability of the packagings in Examples 65 to 72 and Comparative Examples 25 to 27, in which the fifth sealant layer was used, was low. It is presumed that this is partly because the elastic modulus in the MD direction of the fourth sealant layer was low compared to the first sealant layer, and the fifth sealant layer was too soft. In Examples 49 to 56 and Comparative Examples 22 to 24, in which the third sealant layer was used, the durability of the packagings was lower compared to Examples 1 to 48, 57 to 80, and others. It is presumed that this is partly because the third sealant layer was too hard.

**Reference Signs List**

1... laminate, 10... barrier layer, 11... base, 12... adhesion layer, 13... vapor deposition layer, 14... barrier coat, 20... sealant layer, 30... first adhesive layer, 40... support layer, 50... second adhesive layer.

**Claims**

1.  A gas barrier laminate comprising:

    a barrier layer having a base on which a barrier coat is provided;
    a sealant layer overlapping a first main surface of the barrier layer;
    a support layer overlapping a second main surface of the barrier layer;
    a first adhesive layer that bonds the barrier layer and the sealant layer; and
    a second adhesive layer that bonds the barrier layer and the support layer,
    wherein the first adhesive layer includes a two-component curing type urethane adhesive,
    wherein the base includes a polyolefin, and
    wherein, after retort treatment is performed on the gas barrier laminate, an elastic modulus of the first adhesive layer, as measured with a scanning probe microscope, is 5 MPa or more and less than 53 MPa.

2.  The gas barrier laminate according to claim 1,

    wherein the second adhesive layer includes a two-component curing type urethane adhesive, and
    wherein, after retort treatment is performed on the gas barrier laminate, an elastic modulus of the second adhesive layer, as measured with a scanning probe microscope, is 5 MPa or more and less than 53 MPa.

3.  The gas barrier laminate according to claim 1 or 2,

    wherein the barrier layer further includes an anchor coat layer and a vapor deposition layer that are located between the base and the barrier coat, and
    wherein the anchor coat layer is located between the base and the vapor deposition layer.

4. The gas barrier laminate according to claim 3,
wherein a thickness of the vapor deposition layer is 5 nm or more and 80 nm or less.

5. The gas barrier laminate according to claim 1 or 2,
wherein, before the retort treatment is performed, an elastic modulus of the first adhesive layer, as measured with a scanning probe microscope, is 55 MPa or more.

6. The gas barrier laminate according to claim 1 or 2,
wherein each of a thickness of the first adhesive layer and a thickness of the second adhesive layer is 0.5 $\mu$m or more and 10 $\mu$m or less.

7. The gas barrier laminate according to claim 1 or 2,
wherein an elastic modulus of the sealant layer is 600 MPa or more and 1,400 MPa or less.

8. The gas barrier laminate according to claim 1 or 2,
wherein each of the base and the sealant layer is a polyolefin film, and the proportion of the total mass of polyolefin in the gas barrier laminate is 90% by mass or more.

9. The gas barrier laminate according to claim 8,
wherein the base is an oriented polypropylene film, and the sealant layer is a cast polypropylene film.

10. A packaging being a packaging bag made from the gas barrier laminate according to claim 1 or 2.

**Fig.1**

1

MD

TD

# Fig.2

**Fig.3**

# Fig.4

## INTERNATIONAL SEARCH REPORT

International application No.

**PCT/JP2024/021651**

### A. CLASSIFICATION OF SUBJECT MATTER

*B32B 27/32*(2006.01)i; *B32B 7/022*(2019.01)i; *B65D 65/40*(2006.01)i
FI:   B32B27/32 E; B32B7/022; B65D65/40 D

According to International Patent Classification (IPC) or to both national classification and IPC

### B. FIELDS SEARCHED

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2023-79681 A (TOPPAN PRINTING CO., LTD.) 08 June 2023 (2023-06-08) entire text | 1-10 |
| A | WO 2021/230319 A1 (TOPPAN PRINTING CO., LTD.) 18 November 2021 (2021-11-18) entire text | 1-10 |
| A | JP 2021-20391 A (TOPPAN PRINTING CO., LTD.) 18 February 2021 (2021-02-18) entire text | 1-10 |
| A | JP 10-29264 A (TOYO BOSEKI KABUSHIKI KAISHA) 03 February 1998 (1998-02-03) entire text | 1-10 |
| A | JP 2019-217764 A (DAI NIPPON PRINTING CO., LTD.) 26 December 2019 (2019-12-26) entire text | 1-10 |
| A | JP 2003-236972 A (DAI NIPPON PRINTING CO., LTD.) 26 August 2003 (2003-08-26) entire text | 1-10 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/021651**

| Patent document cited in search report | | | Publication date (day/month/year) | Patent family member(s) | | | Publication date (day/month/year) |
|---|---|---|---|---|---|---|---|
| JP | 2023-79681 | A | 08 June 2023 | (Family: none) | | | |
| WO | 2021/230319 | A1 | 18 November 2021 | (Family: none) | | | |
| JP | 2021-20391 | A | 18 February 2021 | US | 2022/0153006 | A1 | |
| | | | | WO | 2021/020400 | A1 | |
| | | | | EP | 4005791 | A1 | |
| | | | | CN | 114126974 | A | |
| JP | 10-29264 | A | 03 February 1998 | US | 5939205 | A | |
| | | | | EP | 806448 | A2 | |
| | | | | KR | 10-0451809 | B1 | |
| JP | 2019-217764 | A | 26 December 2019 | (Family: none) | | | |
| JP | 2003-236972 | A | 26 August 2003 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4200972 B